(19) Europäisches Patentamt
European Patent Office
Office européen des brevets

(11) **EP 4 166 329 A1**

(12) **EUROPEAN PATENT APPLICATION**
published in accordance with Art. 153(4) EPC

(43) Date of publication:
**19.04.2023  Bulletin 2023/16**

(21) Application number: **21826502.3**

(22) Date of filing: **14.06.2021**

(51) International Patent Classification (IPC):
*B32B 27/28* $^{(2006.01)}$      *C08K 5/09* $^{(2006.01)}$
*C08K 5/098* $^{(2006.01)}$     *C08L 29/04* $^{(2006.01)}$
*C08L 77/00* $^{(2006.01)}$     *C08K 3/38* $^{(2006.01)}$

(52) Cooperative Patent Classification (CPC):
**B32B 27/28; C08K 3/38; C08K 5/09; C08K 5/098; C08L 29/04; C08L 77/00**

(86) International application number:
**PCT/JP2021/022569**

(87) International publication number:
**WO 2021/256436 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2020  JP 2020103826**

(71) Applicant: **Mitsubishi Chemical Corporation**
**Chiyoda-ku**
**Tokyo 100-8251 (JP)**

(72) Inventor: **KOMURO Ryohei**
**Tokyo 100-8251 (JP)**

(74) Representative: **Vossius & Partner**
**Patentanwälte Rechtsanwälte mbB**
**Siebertstraße 3**
**81675 München (DE)**

(54) **ETHYLENE-VINYL-ALCOHOL-BASED COPOLYMER RESIN COMPOSITION, MULTILAYER STRUCTURAL BODY, AND PACKAGING BODY**

(57)    A resin composition having excellent properties is provided. The resin composition contains an ethylene-vinyl alcohol copolymer (A), a polyamide resin (B), acetic acid and/or its salt (C), an aliphatic carboxylic acid (D) other than acetic acid, and an aliphatic carboxylic acid metal salt (E) which is a metal salt of (D), wherein: the metal moiety of (E) is selected from elements belonging to the Long Periodic Table 4th-period d-block, the weight ratio (A)/(B) is 99/1 to 15/85, the amounts of (C), (D), and (E) on a weight basis satisfy expressions (1) and (2):

$$0.001 \leq (\text{Amount of (E) on metal ion basis})/(\text{Amount of (C) on acetate ion basis}) \leq 1.5 \ \ldots\ldots\ (1)$$

$$0.11 \leq (\text{Amount of (E) on metal ion basis})/(\text{Amount of (D) on carboxylate ion basis}) \leq 100 \ \ldots\ldots(2),$$

and
the elongational viscosity of the resin composition at 210°C at 100 S$^{-1}$ satisfies expression (3):

$$350 \leq (\text{Elongational viscosity (Pa•s)}) \leq 47,000 \ \ldots\ldots(3).$$

**Description**

TECHNICAL FIELD

The present disclosure relates to an ethylene-vinyl alcohol copolymer (hereinafter sometimes referred to as "EVOH") resin composition and, more specifically, to an EVOH resin composition which is excellent in impact resistance and hot water insolubility after hot water treatment and in flow stability and adhesive strength, while maintaining excellent gas barrier properties.

BACKGROUND ART

EVOH is excellent in oxygen barrier property and other gas barrier properties, because hydroxyl groups richly present in molecular chains of the EVOH are firmly hydrogen-bonded to form crystalline portions, which prevent intrusion of oxygen from the outside. In general, the EVOH is used for formation of an intermediate layer of a laminate including resin layers laminated together, and the laminate is used for various packages.

In particular, it is known that a laminate including a layer of an EVOH resin composition and a layer of some other thermoplastic resin is useful as a material for food packages to be subjected to a boiling treatment or a retort treatment. When the laminate produced from the EVOH resin composition is subjected to the boiling/retort treatment (hot water treatment), however, water is liable to intrude into the EVOH layer. After the boiling/retort treatment (after the laminate is dried), the water thus having intruded is removed to leave voids in the laminate, so that the laminate is whitened. This disadvantageously reduces the mechanical strength (impact resistance) of the laminate.

For the purpose of improving the hot water insolubility (preventing the whitening) of the EVOH, therefore, PTL 1, for example, discloses a laminate having a resin composition layer formed from a composition containing an EVOH, a polyamide resin, and an alkali metal.

For the purpose of improving the impact resistance of the EVOH, PTL 2 and PTL 3, for example, each disclose a laminate (package) having a resin composition layer formed from a composition containing an EVOH and an ethylene-vinyl acetate copolymer. Further, PTL 4 and PTL 5 each disclose a laminate having a resin composition layer formed from a composition containing an EVOH and a partial saponification product of an ethylene-vinyl acetate copolymer.

RELATED ART DOCUMENT

PATENT DOCUMENT

PTL 1: JP-A-HEI4(1992)-131237
PTL 2: JP-A-SHO61(1986)-220839
PTL 3: JP-A-SHO62(1987)-152847
PTL 4: JP-A-HEI1(1989)-279949
PTL 5: JP-A-HEI3(1991)-192140

SUMMARY

In PTL 1, however, a certain impact resistance improving effect is recognized after the retort treatment (after the drying), but the flow stability of the resin tends to be poorer. In PTL 2 to PTL 5, the proportion of the EVOH blended in the resin composition is reduced because the EVOH is partly replaced with a resin other than the EVOH. This tends to deteriorate the gas barrier properties attributable to the EVOH. Further, the boiling/retort treatment (hot water treatment) tends to lower the impact resistance.

With the spread of internet shopping and the economic growth of developing countries in recent years, article distribution has been rapidly globalized. Therefore, the transportation of foods, chemicals, and other articles tends to require longer transportation periods. Hence, there is a demand for an EVOH-based multilayer structure (package) which has a higher resistance to fall and impact during longer-period transportation and handling, and more excellent gas barrier properties, and is excellent in hot water insolubility and flow stability.

In view of the foregoing, the present disclosure provides an EVOH resin composition which is excellent in impact resistance and hot water insolubility after the hot water treatment and in flow stability and adhesive strength, while maintaining excellent gas barrier properties.

The inventor of the present disclosure conducted intensive studies in view of the forgoing. As a result, the inventor found that, where a polyamide resin, acetic acid and/or its salt, an aliphatic carboxylic acid other than acetic acid, and a metal salt of the aliphatic carboxylic acid containing at least one metal element selected from elements belonging to the Long Periodic Table 4th-period d-block are used in combination with an EVOH, it is possible to provide an EVOH resin composition which is excellent in impact resistance and hot water insolubility after the hot water treatment and in flow stability and adhesive strength, while maintaining excellent gas barrier properties.

It is generally known that the fatty acid metal salt promotes the thermal decomposition of the EVOH to thereby lower the impact resistance and the flow stability of the EVOH resin composition. For the purpose of improving the mechanical properties (impact resistance) and the flow stability of the EVOH, those skilled in the art generally avoid adding the fatty acid metal salt to the EVOH. However, the inventor found that, where a polyamide resin, acetic acid and/or its salt, an aliphatic carboxylic acid other than acetic acid and its specific metal salt are used in combination with the EVOH so as to satisfy predetermined relationships, it is possible to improve the flow stability and the impact resistance after the hot water treatment, while maintaining excellent gas barrier properties, contrary to the conventional expectation.

The present disclosure provides the following [1] to [8].

[1] According to a first aspect, there is provided an EVOH resin composition which contains an EVOH (A), a polyamide resin (B), acetic acid and/or its salt (C), an aliphatic carboxylic acid (D) other than acetic acid, and an aliphatic carboxylic acid metal salt (E) which is a metal salt of the aliphatic carboxylic acid (D), wherein the metal moiety of the aliphatic carboxylic acid metal salt (E) is at least one selected from elements belonging to the Long Periodic Table 4th-period d-block, wherein the ethylene-vinyl alcohol copolymer (A) and the polyamide resin (B) are present in a weight ratio of ethylene-vinyl alcohol copolymer (A)/polyamide resin (B) = 99/1 to 15/85, wherein the acetic acid and/or its salt (C), the aliphatic carboxylic acid (D), and the aliphatic carboxylic acid metal salt (E) are present in amounts, on a weight basis, satisfying the following expressions (1) and (2):

$$0.001 \leq (\text{Amount of (E) on metal ion basis})/(\text{Amount of (C) on acetate ion basis}) \leq 1.5 \ \ldots\ (1)$$

$$0.11 \leq (\text{Amount of (E) on metal ion basis})/(\text{Amount of (D) on carboxylate ion basis}) \leq 100 \ \ldots(2),$$

wherein the elongational viscosity of the resin composition as measured at 210°C at 100 $S^{-1}$ satisfies the following expression (3):

$$350 \leq (\text{Elongational viscosity (Pa}\cdot\text{s)}) \leq 47,000 \ \ldots(3)$$

[2] In the ethylene-vinyl alcohol copolymer resin composition according to [1], the amount of the aliphatic carboxylic acid metal salt (E) on a metal ion basis is 1 to 500 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E).

[3] In the ethylene-vinyl alcohol copolymer resin composition according to [1] or [2], the amount of the aliphatic carboxylic acid (D) on a carboxylate ion basis is 0.001 to 450 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E).

[4] In the ethylene-vinyl alcohol copolymer resin composition according to any one of [1] to [3], the amount of the acetic acid and/or its salt (C) on an acetate ion basis is 10 to 2,000 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E).

[5] The ethylene-vinyl alcohol copolymer resin composition according to any one of [1] to [4] further contains boric acid and/or its salt (F), wherein the boric acid and/or its salt (F) is present in an amount of 0.001 to 500 ppm on a boron basis based on the total amount of the ethylene-vinyl alcohol copolymer (A), the polyamide resin (B), the acetic acid and/or its salt (C), the aliphatic carboxylic acid (D), the aliphatic carboxylic acid metal salt (E), and the boric acid and/or its salt (F).

[6] In the ethylene-vinyl alcohol copolymer resin composition according to any one of [1] to [5], the weight ratio (E)/(F) of the amount of the aliphatic carboxylic acid metal salt (E) on a metal ion basis to the amount of the boric acid and/or its salt (F) on a boron basis is $0.11 \leq (E)/(F) \leq 100$.

[7] A multilayer structure having a layer formed from the ethylene-vinyl alcohol copolymer resin composition according to any one of [1] to [6].

[8] A package comprising the multilayer structure according to [7].

The EVOH resin composition according to the present disclosure contains the ethylene-vinyl alcohol copolymer (A) (i.e., EVOH (A)), the polyamide resin (B), the acetic acid and/or its salt (C), the aliphatic carboxylic acid (D) other than acetic acid, and the aliphatic carboxylic acid metal salt (E) which is the metal salt of the aliphatic carboxylic acid (D), wherein the metal moiety of the aliphatic carboxylic acid metal salt (E) is at least one selected from the elements belonging to the Long Periodic Table 4th-period d-block, wherein the weight ratio between the ethylene-vinyl alcohol copolymer (A) and the polyamide resin (B) is (ethylene-vinyl alcohol copolymer (A))/(polyamide resin (B)) = 99/1 to 15/85, wherein the amounts of the acetic acid and/or its salt (C), the aliphatic carboxylic acid (D), and the aliphatic carboxylic acid metal salt (E) on a weight basis satisfy the following expressions (1) and (2):

$$0.001 \leq \text{(Amount of (E) on metal ion basis)/(Amount of (C) on acetate ion basis)} \leq 1.5 \quad .....(1)$$

$$0.11 \leq \text{(Amount of (E) on metal ion basis)/(Amount of (D) on carboxylate ion basis)} \leq 100 \quad .....(2),$$

wherein the elongational viscosity of the resin composition as measured at 210°C at 100 $S^{-1}$ satisfies the following expression (3):

$$350 \leq \text{(Elongational viscosity (Pa•s))} \leq 47,000 \quad .....(3)$$

Therefore, the EVOH resin composition is excellent in impact resistance and hot water insolubility after the hot water treatment and in flow stability and adhesive strength, while maintaining excellent gas barrier properties.

Where the amount of the aliphatic carboxylic acid metal salt (E) on a metal ion basis is 1 to 500 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E), the EVOH resin composition is more excellent in impact resistance after the hot water treatment, flow stability, and adhesive strength.

Where the amount of the aliphatic carboxylic acid (D) on a carboxylate ion basis is 0.001 to 450 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E), the EVOH resin composition is more excellent in impact resistance after the hot water treatment, and flow stability.

Where the amount of the acetic acid and/or its salt (C) on an acetate ion basis is 10 to 2,000 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E), the EVOH resin composition is more excellent in impact resistance after the hot water treatment, and flow stability.

Where the ethylene-vinyl alcohol copolymer resin composition further contains boric acid and/or its salt (F) and the amount of the boric acid and/or its salt (F) on a boron basis is 0.001 to 500 ppm based on the total amount of the ethylene-vinyl alcohol copolymer (A), the polyamide resin (B), the acetic acid and/or its salt (C), the aliphatic carboxylic acid (D), the aliphatic carboxylic acid metal salt (E), and the boric acid and/or its salt (F), the EVOH resin composition is more excellent in impact resistance after the hot water treatment, and flow stability.

Where the weight ratio (E)/(F) of the amount of the aliphatic carboxylic acid metal salt (E) on a metal ion basis to the amount of the boric acid and/or its salt (F) on a boron basis is 0.11 ≤ (E)/(F) ≤ 100, the EVOH resin composition is more excellent in impact resistance after the hot water treatment, and flow stability.

The multilayer structure produced by using the EVOH resin composition is excellent in impact resistance and hot water insolubility after the hot water treatment and in flow stability and adhesive strength, while maintaining excellent gas barrier properties.

The package according to the present disclosure is produced from the multilayer structure. Therefore, the package is also excellent in impact resistance and hot water insolubility after the hot water treatment and in flow stability and adhesive strength, while maintaining excellent gas barrier properties.

DESCRIPTION OF EMBODIMENTS

Preferred embodiments of the present disclosure will hereinafter be described in detail by way of example.

The EVOH resin composition of the present disclosure contains an EVOH (A) as a main component, and contains a polyamide resin (B), acetic acid and/or its salt (C), an aliphatic carboxylic acid (D) other than acetic acid, and an aliphatic carboxylic acid metal salt (E) which is a metal salt of the aliphatic carboxylic acid (D). The base resin of the EVOH resin composition of the present disclosure is the EVOH (A). The proportion of the EVOH (A) in the EVOH resin composition is typically not less than 60 wt.%, preferably not less than 70 wt.%, more preferably not less than 80 wt.%, particularly preferably not less than 90 wt.%. The components of the EVOH resin composition will hereinafter be described.

In the present disclosure, an expression "and/or" means "at least one of" and, for example, "X and/or Y" has three meanings including X alone, Y alone, and X and Y.

<EVOH (A)>

The EVOH (A) to be used in the present disclosure is typically a resin prepared by copolymerizing ethylene and a vinyl ester monomer and then saponifying the resulting copolymer. The EVOH (A) is a water-insoluble thermoplastic resin known as an ethylene-vinyl alcohol copolymer or a saponification product of an ethylene-vinyl acetate copolymer. A known polymerization method such as solution polymerization, suspension polymerization or emulsion polymerization can be used for the polymerization. In general, solution polymerization using methanol as a solvent is used. The saponification of the resulting ethylene-vinyl ester copolymer may be achieved by a known saponification method.

That is, the EVOH (A) to be used in the present disclosure mainly contains an ethylene structural unit and a vinyl alcohol structural unit, and further contains a slight amount of a vinyl ester structural unit left unsaponified. The EVOH is also referred to generally as "ethylene-vinyl ester copolymer saponification product."

Vinyl acetate is typically used as the vinyl ester monomer, because it is easily commercially available and ensures a higher impurity treatment efficiency in the preparation. Other examples of the vinyl ester monomer include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. The aliphatic vinyl esters preferably have a carbon number of 3 to 20, more preferably 4 to 10, particularly preferably 4 to 7. In general, these are each used alone. As required, two or more of these may be used in combination.

The ethylene structural unit content of the EVOH (A) is typically 20 to 60 mol %, preferably 21 to 55 mol %, more preferably 22 to 50 mol %, particularly preferably 23 to 45 mol %, as measured in conformity with ISO14663. If the ethylene structural unit content is excessively low, the high-humidity gas barrier property and the melt formability tend to be poorer. If the ethylene structural unit content is excessively high, on the other hand, the gas barrier property tends to be poorer.

The vinyl ester saponification degree of the EVOH (A) is typically 90 to 100 mol %, preferably 95 to 100 mol %, particularly preferably 99 to 100 mol %, as measured in conformity with JIS K6726 (with the use of a solution prepared by homogenously dissolving the EVOH in a water/methanol solvent). If the saponification degree is excessively low, the gas barrier property, the heat stability, the humidity resistance, and the like tend to be poorer.

The EVOH (A) typically has a melt flow rate (MFR) of 0.5 to 100 g/10 minutes, preferably 1 to 50 g/10 minutes, particularly preferably 3 to 35 g/10 minutes (as measured at 210°C with a load of 2160 g). If the MFR of the EVOH (A) is excessively high, the laminate formability (film formability) tends to be poorer. If the MFR of the EVOH (A) is excessively low, the melt extrusion tends to be difficult.

The EVOH (A) to be used in the present disclosure may contain a structural unit derived from any of the following comonomers in addition to the ethylene structural unit and the vinyl alcohol structural unit (including the unsaponified vinyl ester structural unit). For example, the comonomers include: $\alpha$-olefins such as propylene, isobutene, $\alpha$-octene, $\alpha$-dodecene, and $\alpha$-octadecene; hydroxyl-containing $\alpha$-olefins such as 3-buten-1-ol, 4-penten-1-ol, and 3-butene-1,2-diol, and hydroxyl-containing $\alpha$-olefin derivatives including esterification products and acylation products of these hydroxyl-containing $\alpha$-olefins; hydroxymethyl vinylidene diacetate compounds such as 1,3-diacetoxy-2-methylenepropane, 1,3-dipropionyloxy-2-methylenepropane, and 1,3-dibutyronyloxy-2-methylenepropane; unsaturated carboxylic acids, and salts, partial alkyl esters, full alkyl esters, nitriles, amides, and anhydrides of the unsaturated carboxylic acids; unsaturated sulfonic acids, and salts of the unsaturated sulfonic acids; vinylsilane compounds; vinyl chloride; and styrene.

Post-modified EVOHs such as urethanized EVOH, acetalized EVOH, cyanoethylated EVOH, and oxyalkylenated EVOH may be used as the EVOH (A).

Of these modified EVOHs, an EVOH having a primary hydroxyl group introduced to its side chain by copolymerization is preferred because the secondary formability in stretching process, vacuum pressure forming process, and the like is improved. Particularly, an EVOH having a 1,2-diol structure in its side chain is preferred.

The EVOH (A) to be used in the present disclosure may be a mixture of different EVOHs. These EVOHs may have different ethylene structural unit contents, different saponification degrees, different melt flow rates (MFRs) (as measured at 210°C with a load of 2160 g), different comonomers, and different modification degrees (e.g., different side-chain primary hydroxyl group-containing structural unit contents).

The EVOH mixture to be used as the EVOH (A) may be a combination of EVOH resins selected from the aforementioned EVOHs. The EVOH mixture is typically a combination of EVOHs having different ethylene structural unit contents such that a difference (ΔEt) between the highest one and the lowest one of the ethylene structural unit contents of the EVOHs is not less than 3 mol %, preferably 5 to 30 mol %, particularly preferably 10 to 25 mol %. If the difference in ethylene structural unit content is excessively small, the stretchability tends to be insufficient. If the difference in ethylene structural unit content is excessively great, the gas barrier property tends to be insufficient.

<Polyamide Resin (B)>

The polyamide resin (B) to be used in the present disclosure is not particularly limited, but a known polyamide resin may be used.

Specific examples of the polyamide resin (B) include homopolymers such as polycapramide (nylon 6), poly-ω-aminoheptanoic acid (nylon 7), poly-ω-aminononanoic acid (nylon 9), polyundecanamide (nylon 11), and polylauryllactam (nylon 12). Of these, polycapramide (nylon 6) is preferred. Other examples of the polyamide resin (B) include: polyamide copolymer resins including aliphatic polyamides such as polyethylenediamine adipamide (nylon 26), polytetramethylene adipamide (nylon 46), polyhexamethylene adipamide (nylon 66), polyhexamethylene sebacamide (nylon 610), polyhexamethylene dodecamide (nylon 612), polyoctamethylene adipamide (nylon 86), polydecamethylene adipamide (nylon 108), caprolactam/lauryllactam copolymer (nylon 6/12), caprolactam/ω-aminononanoic acid copolymer (nylon 6/9), caprolactam/hexamethylenediammonium adipate copolymer (nylon 6/66), lauryllactam/hexamethylenediammonium adipate copolymer (nylon 12/66), ethylenediamine adipamide/hexamethylenediammonium adipate copolymer (nylon 26/66), caprolactam/hexamethylenediammonium adipate/hexamethylenediammonium sebacate copolymer (nylon 66/610), and ethyleneammonium adipate/hexamethylenediammonium adipate/hexamethylenediammonium sebacate copolymer (nylon 6/66/610), and aromatic polyamides such as polyhexamethylene isophthalamide, polyhexamethylene terephthalamide, poly-m-xylylene adipamide, hexamethylene isophthalamide/terephthalamide copolymer, poly-p-phenylene terephthalamide, and poly-p-phenylene/3,4'-diphenyl ether terephthalamide; and amorphous polyamides, polyamide resins obtained by modifying any of these polyamide resins with an aromatic amine such as methylenebenzylamine or m-xylenediamine, and m-xylylenediammonium adipate. These may be each used alone, or two or more of these may be used in combination.

Particularly, a polyamide resin having a melting point of not higher than 240°C, particularly 160 to 230°C is preferred. Specifically, polycapramide (nylon 6), polylauryllactam (nylon 12), caprolactam/lauryllactam copolymer (nylon 6/12), caprolactam/hexamethylenediammonium adipate copolymer (nylon 6/66), poly-m-xylylene adipamide or the like is preferably used, and polycapramide (nylon 6) is most preferred because of its excellent retort resistance. These polyamide resins may be adjusted such that molecular terminal carboxyl groups and/or amino groups are modified with an alkyl monocarboxylate, an alkyl dicarboxylate, an alkylmonoamine, an alkyldiamine or the like.

In the EVOH resin composition of the present disclosure, the weight ratio (A)/(B) of the ethylene-vinyl alcohol copolymer (A) to the polyamide resin (B) is typically 99/1 to 15/85, preferably 97/3 to 30/70, particularly preferably 95/5 to 60/40, especially preferably 90/10 to 70/30. If the weight ratio (A)/(B) is smaller than the aforementioned range, the impact resistance and the hot water insolubility after the hot water treatment tend to be insufficient. If the weight ratio (A)/(B) is greater than the aforementioned range, the gas barrier property tends to be insufficient.

The reason why excellent effects are provided by the use of the polyamide resin (B) is not clarified, but it is supposed that the polyamide resin is capable of forming a network structure by interaction between its amide bonds and the OH groups and/or the ester groups of the EVOH, thereby suppressing the bleed-out of the EVOH during the hot water treatment and the formation of voids in the EVOH after the hot water treatment (after the drying). This supposedly improves the impact resistance and the hot water insolubility after the hot water treatment.

<Acetic Acid and/or its Salt (C)>

The EVOH resin composition of the present disclosure contains the acetic acid and/or its salt (C). That is, the EVOH resin composition of the present disclosure contains at least one selected from the group consisting of acetic acid and acetic acid salts.

Specific examples of the acetic acid and/or acetic acid salt (C) include acetic acid, sodium acetate, potassium acetate, calcium acetate, magnesium acetate, manganese acetate, copper acetate, cobalt acetate, and zinc acetate. These can be each used alone, or two or more of these can be used in combination. OF these, acetic acid, sodium acetate, potassium acetate, calcium acetate, and magnesium acetate are preferred, and acetic acid, sodium acetate, and potassium acetate are particularly preferred. Acetic acid and sodium acetate are still more preferred. It is especially preferred to use sodium acetate alone.

The amount of the acetic acid and/or its salt (C) on an acetate ion basis is typically 10 to 2,000 ppm, preferably 15 to 1,500 ppm, particularly preferably 20 to 1,000 ppm, especially preferably 25 to 650 ppm, based on the total amount of the EVOH (A), the polyamide resin (B), the acetic acid and/or its salt (C), the aliphatic carboxylic acid (D), and the aliphatic carboxylic acid metal salt (E).

If the amount of the acetic acid and/or its salt (C) is excessively small, the adhesive strength tends to be lower due to the thermal decomposition product of the aliphatic carboxylic acid metal salt (E), and the effect of the present disclosure tends to be insufficient. If the amount of the acetic acid and/or its salt (C) is excessively great, the acetic acid and/or its salt (C) per se functions as a plasticizer, so that the effect of the present disclosure tends to be insufficient.

The amount of the acetic acid and/or its salt (C) on an acetate ion basis can be measured by a known analysis method, e.g., by a liquid chromatography mass spectrometry (LC/MS), a gas chromatography mass spectrometry (GC/MS) or the like.

<Aliphatic Carboxylic Acid (D) other than Acetic Acid>

The EVOH resin composition of the present disclosure contains the aliphatic carboxylic acid (D) other than acetic acid, and the aliphatic carboxylic acid (D) typically has a carbon number of 3 to 30, preferably 4 to 22, more preferably 4 to 20, particularly preferably 5 to 14. Where the carbon number of the aliphatic carboxylic acid (C) falls within the aforementioned range, the effect of the present disclosure tends to be more efficiently provided.

Examples of the aliphatic carboxylic acid (D) include aliphatic monocarboxylic acids, aliphatic dicarboxylic acids, and aliphatic tricarboxylic acids. Specific examples of the aliphatic carboxylic acid (D) include: saturated aliphatic monocarboxylic acids such as butyric acid, valeric acid, caproic acid, enanthic acid, caprylic acid, pelargonic acid, capric acid, lauric acid, myristic acid, pentadecylic acid, palmitic acid, margaric acid, stearic acid, 12-hydroxystearic acid, arachidic acid, heneicosylic acid, behenic acid, lignoceric acid, montanic acid, melissic acid, tartronic acid, glyceric acid, hydroxybutyric acid, malic acid, tartaric acid, gluconic acid, mevalonic acid, and pantoic acid; unsaturated aliphatic monocarboxylic acids such as linoleic acid, linolenic acid, pinolenic acid, eleostearic acid, isostearic acid, isononanoic acid, 2-ethylhexanoic acid, 2-heptylundecanoic acid, 2-octyldodecanoic acid, palmitoleic acid, sapienic acid, oleic acid, elaidic acid, vaccenic acid, gadoleic acid, eicosenoic acid, erucic acid, nervonic acid, and ricinoleic acid; saturated aliphatic dicarboxylic acids such as succinic acid, adipic acid, pimelic acid, suberic acid, azelaic acid, and sebacic acid; unsaturated aliphatic dicarboxylic acids such as eicosadienoic acid and docosadienoic acid; and saturated aliphatic tricarboxylic acids such as citric acid, isocitric acid, and aconitic acid. These may be each used alone, or two or more of these may be used in combination as the aliphatic carboxylic acid (D). Particularly, the aliphatic monocarboxylic acids having a single carboxyl group are preferred from the viewpoint of the heat stability (for the prevention of viscosity increase during melt forming and the occurrence of fisheyes). The saturated aliphatic monocarboxylic acids are more preferred, and saturated aliphatic monocarboxylic acids having a carbon number of 6 to 22 are still more preferred. Stearic acid, caproic acid, caprylic acid, lauric acid, and behenic acid are particularly preferred, and caproic acid, caprylic acid, and lauric acid are especially preferred.

The amount of the aliphatic carboxylic acid (D) on a carboxylate ion basis is typically 0.001 to 450 ppm, more preferably 0.01 to 350 ppm, particularly preferably 0.1 to 250 ppm, especially preferably 0.5 to 200 ppm, based on the total amount of the EVOH (A), the polyamide resin (B), the acetic acid and/or its salt (C), the aliphatic carboxylic acid (D), and the aliphatic carboxylic acid metal salt (E).

If the amount of the aliphatic carboxylic acid (D) is excessively small, the heat stability of the aliphatic carboxylic acid metal salt (E) tends to be insufficient and, as a result, the effect of the present disclosure tends to be insufficient. If the amount of the aliphatic carboxylic acid (D) is excessively great, the aliphatic carboxylic acid (D) per se functions as a plasticizer, so that the effect of the present disclosure tends to be insufficient.

The weight ratio (C)/(D) of the amount of the acetic acid and/or its salt (C) on an acetate ion basis to the amount of the aliphatic carboxylic acid (D) on a carboxylate ion basis is typically 0.0001 to 10,000, preferably 0.001 to 5,000, more preferably 0.1 to 1,000, particularly preferably 1 to 650, especially preferably 1 to 600.

Where the weight ratio (C)/(D) falls within the aforementioned range, the effect of the present disclosure tends to be more remarkable. If the weight ratio (C)/(D) is smaller than the aforementioned range, the adhesive strength tends to be insufficient. If the weight ratio (C)/(D) is greater than the aforementioned range, the effect of the present disclosure tends to be insufficient.

<Aliphatic Carboxylic Acid Metal Salt (E)>

The EVOH resin composition of the present disclosure contains the aliphatic carboxylic acid metal salt (E) which is the metal salt of the aliphatic carboxylic acid (D) other than acetic acid.

It is essential that the metal moiety of the aliphatic carboxylic acid metal salt (E) is an element belonging to the Long Periodic Table 4th-period d-block. Preferred examples of the element include chromium, cobalt, nickel, copper, and zinc. Particularly, zinc is preferred, which is highly effective, less expensive, and easily available.

The reason why excellent effects are provided by the use of the aliphatic carboxylic acid metal salt (E) is not clarified, but it is supposed that, where the metal moiety of the aliphatic carboxylic acid metal salt (E) is at least one selected from the elements belonging to the Long Periodic Table 4th-period d-block, excessive thermal decomposition which may otherwise deteriorate the mechanical properties (impact resistance) is moderately suppressed, and molecular orientation, crystal structure, and other higher-dimensional features to be formed during multilayer coextrusion of the EVOH resin composition can be made highly uniform. This supposedly improves the impact resistance after the hot water treatment.

The anionic moiety of the aliphatic carboxylic acid metal salt (E) may be any of the exemplary aliphatic carboxylic acids described as the aliphatic carboxylic acid (D) other than acetic acid. In the present disclosure, it is important that the anionic moiety of the aliphatic carboxylic acid metal salt (E) is the same as the aliphatic carboxylic acid (D). Where the anionic moiety of the aliphatic carboxylic acid metal salt (E) is the same as the aliphatic carboxylic acid (D), the EVOH resin composition can have excellent impact resistance after the hot water treatment.

Where the EVOH resin composition of the present disclosure contains a plurality of aliphatic carboxylic acids (D) and a plurality of aliphatic carboxylic acid metal salts (E), it is merely necessary that at least one of the plural aliphatic carboxylic acids (D) is the same as any of the anionic moieties of the plural aliphatic carboxylic acid metal salts (E).

The reason why excellent effects are provided when the anionic moiety of the aliphatic carboxylic acid metal salt (E) is the same as the aliphatic carboxylic acid (D) is not clarified, but it is supposed that, where the aliphatic carboxylic acid (D) and the aliphatic carboxylic acid metal salt (E) are used in combination in specific amounts, the dispersibility of the aliphatic carboxylic acid metal salt (E) is significantly improved to thereby improve the effect of the present disclosure. Further, it is supposed that the aliphatic carboxylic acid (D) interacts with the metal moiety of the aliphatic carboxylic acid metal salt (E) to be thereby present in the form of a metal complex and, where the anionic moiety of the aliphatic carboxylic acid metal salt (E) is the same as the aliphatic carboxylic acid (D), the energy state can be maintained more stably. Thus, the EVOH resin composition has excellent heat stability during the melt forming and the hot water treatment and, as a result, is improved in impact resistance after the hot water treatment.

Where the carbon numbers of the aliphatic carboxylic acid (D) and the aliphatic carboxylic acid metal salt (E) are each typically 3 to 30, preferably 4 to 22, more preferably 4 to 20, particularly preferably 5 to 14, the impact resistance after the hot water treatment tends to be more remarkably improved. The reason for this is not clarified, but it is supposed that, where the carbon numbers of the aliphatic carboxylic acid (D) and the aliphatic carboxylic acid metal salt (E) each fall within the aforementioned range, the aliphatic carboxylic acid (D) and the aliphatic carboxylic acid metal salt (E) are easily more homogeneously dispersed in the EVOH resin composition and, as a result, the impact resistance after the hot water treatment of the EVOH resin composition is more remarkably improved.

Where the aliphatic carboxylic acid metal salt (E) is used alone, the impact resistance after the hot water treatment is improved, but the adhesive strength tends to be reduced. The reason for this is not clarified, but it is supposed that the aliphatic carboxylic acid metal salt (E) per se has an insufficient heat stability when being used alone, and the adhesive strength is reduced by the decomposition product of the aliphatic carboxylic acid metal salt (E) generated during the melt forming. In the present disclosure, in contrast, it is supposed that, with the combinational use of the aliphatic carboxylic acid metal salt (E) and the acetic acid and/or its salt (C), the thermal decomposition product of the aliphatic carboxylic acid metal salt (E) is captured by the acetic acid and/or its salt (C), and dispersed in the EVOH resin composition, thereby suppressing the reduction in adhesive strength.

The amount of the aliphatic carboxylic acid metal salt (E) on a metal ion basis is typically 1 to 500 ppm, preferably 5 to 300 ppm, more preferably 10 to 250 ppm, particularly preferably 10 to 200 ppm, especially preferably 30 to 150 ppm, based on the total amount of the EVOH (A), the polyamide resin (B), the acetic acid and/or its salt (C), the aliphatic carboxylic acid (D), and the aliphatic carboxylic acid metal salt (E). If the amount of the aliphatic carboxylic acid metal salt (E) is excessively small, the effect of the present disclosure tends to be insufficient. If the amount of the aliphatic carboxylic acid metal salt (E) is excessively great, the adhesive strength is liable to be reduced.

The amount of the aliphatic carboxylic acid (D) on a carboxylate ion basis and the amount of the aliphatic carboxylic acid metal salt (E) on a metal ion basis can each be measured by a known analysis method. For example, the following methods may be used alone or in combination for the measurement.

(i) Amount of aliphatic carboxylic acid metal salt (E) on metal ion basis

A dry sample is precisely weighed, put in a platinum evaporating dish having a known weight, and carbonized by an electric heater. Then, the sample is burned with heating by a gas burner until no smoke is observed. The platinum evaporating dish containing the resulting sample is put in an electric oven, and the sample is fully ashed at an elevated temperature. The resulting ash is cooled, and then hydrochloric acid and purified water are poured over the ash, which is in turn dissolved in the acid solution with heating by the electric heater. The resulting solution is poured in a measuring flask, and diluted with purified water to a predetermined volume, whereby a sample solution for atomic absorption spectrometry is prepared. The amount of the metal contained in the sample solution is measured by the atomic absorption spectrometry, whereby the amount of the aliphatic carboxylic acid metal salt (E) on a metal ion basis is determined.

(ii) Amount of aliphatic carboxylic acid (D) on carboxylate ion basis

First, the total amount $(d_x)$ of the aliphatic carboxylic acid (D) and the aliphatic carboxylic acid metal salt (E) in the EVOH resin composition on a carboxylate ion basis is determined by using the liquid chromatography mass spectrometry (LC/MS), the gas chromatography mass spectrometry (GC/MS) or the like. Thereafter, the amount $(d_y)$ of the aliphatic carboxylic acid metal salt (E) on a carboxylate ion basis is calculated based on the amount of the aliphatic carboxylic acid metal salt (E) on a metal ion basis. Then, the amount of the aliphatic carboxylic acid (D) on a carboxylate ion basis is determined by a difference $(d_x) - (d_y)$ between the total amount $(d_x)$ of the aliphatic carboxylic acid (D) and the aliphatic carboxylic acid metal salt (E) on a carboxylate ion basis and the amount $(d_y)$ of the aliphatic carboxylic acid metal salt (E) on a carboxylate ion basis.

In the EVOH resin composition of the present disclosure, the weight ratio (E)/(C) of the amount of the aliphatic carboxylic acid metal salt (E) on a metal ion basis to the amount of the acetic acid and/or its salt (C) on an acetate ion basis satisfies the following expression (1):

$$0.001 \leq (\text{Amount of (E) on metal ion basis})/(\text{Amount of (C) on acetate ion basis}) \leq 1.5 \ \ldots\ldots (1)$$

The weight ratio (E)/(C) is preferably $0.005 \leq (E)/(C) \leq 1.1$, more preferably $0.005 \leq (E)/(C) \leq 1.0$, still more preferably $0.01 \leq (E)/(C) \leq 0.8$, particularly preferably $0.04 \leq (E)/(C) \leq 0.48$, especially preferably $0.05 \leq (E)/(C) \leq 0.45$. Where the weight ratio (E)/(C) falls within the aforementioned range, the effect of the present disclosure tends to be more remarkable. If the weight ratio (E)/(C) is smaller than the aforementioned range, the effect of the present disclosure tends to be insufficient. If the weight ratio (E)/(C) is greater than the aforementioned range, the adhesive strength tends to be insufficient.

In the EVOH resin composition of the present disclosure, the weight ratio (E)/(D) of the amount of the aliphatic carboxylic acid metal salt (E) on a metal ion basis to the amount of the aliphatic carboxylic acid (D) on a carboxylate ion basis satisfies the following expression (2):

$$0.11 \leq (\text{Amount of (E) on metal ion basis})/(\text{Amount of (D) on carboxylate ion basis}) \leq 100 \ \ldots\ldots(2)$$

The weight ratio (E)/(D) is preferably $0.13 \leq (E)/(D) \leq 90$, more preferably $0.15 \leq (E)/(D) \leq 80$, particularly preferably $0.2 \leq (E)/(D) \leq 70$. Where the weight ratio (E)/(D) falls within the aforementioned range, the effect of the present disclosure tends to be more remarkable. If the weight ratio (E)/(D) falls outside the aforementioned range, the effect of the present disclosure tends to be insufficient.

The reason why excellent effects are provided when the amounts of the acetic acid and/or its salt (C), the aliphatic carboxylic acid (D), and the aliphatic carboxylic acid metal salt (E) satisfy the above expressions (1) and (2) on a weight basis is not clarified. It is supposed that, where the ratio between the aliphatic carboxylic acid metal salt (E) and the aliphatic carboxylic acid (D) having the same anionic moiety satisfies the above expression (2), the effect of enhancing the dispersibility and the heat stability of the aliphatic carboxylic acid metal salt (E) can be provided and, if the amount of the aliphatic carboxylic acid (D) is excessively great, the aliphatic carboxylic acid (D) per se functions as a plasticizer so that the effect of the present disclosure (the effect of improving the impact resistance after the hot water treatment) is insufficient. Further, it is supposed that, where the ratio between the aliphatic carboxylic acid metal salt (E) and the acetic acid and/or its salt (C) satisfies the above expression (1), the thermal decomposition product of the aliphatic carboxylic acid metal salt (E) is captured to thereby suppress the reduction of the adhesive strength and, if the amount of the acetic acid and/or its salt (C) is excessively great, the heat stability of the EVOH (A) is significantly reduced and the effect of the present disclosure (the effect of improving the impact resistance after the hot water treatment) is insufficient.

<Boric Acid and/or its Salt (F)>

The EVOH resin composition of the present disclosure preferably contains boric acid and/or its salt (F). That is, the EVOH resin composition of the present disclosure preferably contains at least one selected from the group consisting of boric acid and boric acid salts.

Typical examples of the boric acid and/or its salt (F) include boric acid, boric acid metal salts including calcium borate, cobalt borate, zinc borates (zinc tetraborate, zinc metaborate, and the like), aluminum potassium borate, ammonium borates (ammonium metaborate, ammonium tetraborate, ammonium pentaborate, ammonium octaborate, and the like), cadmium borates (cadmium orthoborate, cadmium tetraborate, and the like), potassium borates (potassium metaborate, potassium tetraborate, potassium pentaborate, potassium hexaborate, potassium octaborate, and the like), silver borates (silver metaborate, silver tetraborate, and the like), copper borates (cupric borate, copper metaborate, copper tetraborate, and the like), sodium borates (sodium metaborate, sodium diborate, sodium tetraborate, sodium pentaborate, sodium hexaborate, sodium octaborate, and the like), lead borates (lead metaborate, lead hexaborate, and the like), nickel borates (nickel orthoborate, nickel diborate, nickel tetraborate, nickel octaborate, and the like), barium borates (barium orthoborate, barium metaborate, barium diborate, barium tetraborate, and the like), bismuth borate, magnesium borates (magnesium orthoborate, magnesium diborate, magnesium metaborate, trimagnesium tetraborate, pentamagnesium tetraborate, and the like), manganese borates (manganese borate, manganese metaborate, manganese tetraborate, and the like), lithium borates (lithium metaborate, lithium tetraborate, lithium pentaborate, and the like), and boric acid salt minerals such as borax, kernite, inyoite, kotoite, suanite, and szaibelyite. Of these, borax, boric acid, sodium borates, potassium borates, zinc borates, calcium borates, and magnesium borates are preferred, and boric acid, sodium borates, and zinc borates are particularly preferred. Boric acid is especially preferred.

The amount of the boric acid and/or its salt (F) on a boron basis is typically 0.001 to 500 ppm, preferably 0.01 to 400 ppm, more preferably 0.05 to 330 ppm, particularly preferably 0.1 to 250 ppm, especially preferably 1 to 120 ppm, based on the total amount of the EVOH (A), the polyamide resin (B), the acetic acid and/or its salt (C), the aliphatic carboxylic acid (D), the aliphatic carboxylic acid metal salt (E), and the boric acid and/or its salt (F).

If the amount of the boric acid and/or its salt (F) is excessively small, the effect of the present disclosure (the effect of improving the impact resistance after the hot water treatment, and the flow stability) tends to be insufficient. If the amount of the boric acid and/or its salt (F) is excessively great, a lot of fisheyes are liable to occur in the multilayer structure during laminating, and the effect of the present disclosure (the effect of improving the impact resistance after the hot water treatment, and the flow stability) tends to be insufficient.

The reason why excellent effects are provided by the use of a specific amount of the boric acid and/or its salt (F) is not clarified, but it is supposed that the boric acid and/or its salt (F) dispersed in the EVOH resin composition interacts with the EVOH molecular chains to form a crosslinked structure of the EVOH molecular chains and, when the multilayer coextrusion is performed by using the EVOH resin composition, the formation of the higher-dimensional features (the molecular orientation, the crystal structure, and the like) of the EVOH resin composition is more remarkably promoted. This supposedly significantly improves the impact resistance after the hot water treatment.

Further, it is supposed that the decomposition product of the aliphatic carboxylic acid metal salt (E) and the decomposition product of the EVOH (A) that have not been captured by the acetic acid and/or its salt (C) are captured by the boric acid and/or its salt (F), whereby the effect of the present disclosure can be more easily provided.

The amount of the boric acid and/or its salt (F) on a boron basis can be determined by a known analysis method. For example, the EVOH resin composition is wet-decomposed, and then the resulting solution is diluted to a predetermined volume to provide a test liquid. The amount of boron in the test liquid is determined by inductively coupled plasma emission spectrometry (ICP-AES).

The weight ratio (E)/(F) of the amount of the aliphatic carboxylic acid metal salt (E) on a metal ion basis to the amount of the boric acid and/or its salt (F) on a boron basis is preferably $0.11 \leq (E)/(F) \leq 100$, more preferably $0.13 \leq (E)/(F) \leq 80$, still more preferably $0.15 \leq (E)/(F) \leq 60$, particularly preferably $0.18 \leq (E)/(F) \leq 40$, especially preferably $0.2 \leq (E)/(F) \leq 20$. Where the weight ratio (E)/(F) falls within the aforementioned range, the effect of the present disclosure tends to be more remarkable. If the weight ratio (E)/(F) falls outside the aforementioned range, the effect of the present disclosure tends to be insufficient.

From the viewpoint of the impact resistance, the EVOH resin composition of the present disclosure has an elongational viscosity, as measured at 210°C at 100 $S^{-1}$, satisfying the following expression (3):

$$350 \leq (\text{Elongational viscosity (Pa•s)}) \leq 47{,}000 \ \ldots\ldots(3)$$

The elongational viscosity is preferably $500 \leq (\text{Elongational viscosity (Pa•s)}) \leq 35{,}000$, particularly preferably $700 \leq (\text{Elongational viscosity (Pa•s)}) \leq 30{,}000$, especially preferably $850 \leq (\text{Elongational viscosity (Pa•s)}) \leq 20{,}000$. Where the elongational viscosity falls within the aforementioned range, the effect of the present disclosure tends to be more remarkable. If the elongational viscosity is smaller than the aforementioned range, the effect of the present disclosure tends to be insufficient. If the elongational viscosity is greater than the aforementioned range, the formability during the melt forming tends to be insufficient.

The reason why excellent effects are provided when the elongational viscosity of the EVOH resin composition of the present disclosure as measured at 210°C at 100 $S^{-1}$ satisfies the expression (3), but it is supposed that, where the elongational viscosity of the EVOH resin composition of the present disclosure as measured at 210°C at 100 $S^{-1}$ satisfies the expression (3), an entanglement structure formed by moderate entanglement of the EVOH molecular chains in the EVOH resin composition significantly promotes the formation of the higher-dimensional features (the molecular orientation, the crystal structure, and the like) of the EVOH resin composition. This supposedly significantly improves the impact resistance after the hot water treatment.

<Evaluation Method for Elongational Viscosity (Pa•s) of EVOH Resin Composition>

The elongational viscosity (Pa•s) of the EVOH resin composition of the present disclosure as measured at 210°C at 100 $S^{-1}$ can be determined by performing measurement under the following conditions with the use of a capillary rheometer based on the Cogswell's equations (Polymer Engineering Science, Vol. 12, pp. 64-73 (1972)).

That is, the elongational viscosity ($\eta_e$) and the elongational strain rate (d$\varepsilon$/dt) can be calculated from the following equations (4) to (6) proposed by Cogswell (Polymer Engineering Science, Vol. 12, pp. 64-73 (1972)):

$$\eta_e = [9(n + 1)^2 P_0^2]/[32\eta_s(d\gamma/dt)^2] \ \ldots.(4)$$

$$d\varepsilon/dt = 4\sigma_s(d\gamma/dt)/[3(n + 1)P_0] \ \ldots.(5)$$

$$\sigma_s = k(d\gamma/dt)^n \ \ldots.(6)$$

wherein $\eta_e$ is the elongational viscosity, $\eta_s$ is a shear viscosity, d$\gamma$/dt is a shear strain rate, d$\varepsilon$/dt is an elongational strain rate, $\sigma_s$ is a shear stress, k is a constant, and n is a power exponent, which is determined by fitting the data of the shear stress and the shear strain rate to a quadratic function on assumption that the shear stress and the shear strain rate conform to the power low in a shear rate range (100 $\leq$ d$\gamma$/dt $\leq$ 1,000) where neither melt fracture nor slip-stick occur. $P_0$ is a pressure loss occurring in a die having a capillary length of 0, and is determined by the Bagley correction of the measurement results obtained by using two or more capillaries having different lengths.

Measurement device: REOGRAPH 20 available from Gottfert Inc.
Measurement temperature: 210°C
Long die: Having a length of 10 mm, a diameter of 1 mm, and an inflow angle of 180 degrees
Short die: Having a length of 0.2 mm, a diameter of 1 mm, and an inflow angle of 180 degrees

<Other Thermoplastic Resin>

The EVOH resin composition of the present disclosure may contain a thermoplastic resin other than the EVOH (A) as a resin component in an amount of not greater than 30 wt.% based on the amount of the EVOH (A).

Examples of the other thermoplastic resin include: olefin homopolymers and copolymers such as linear low-density polyethylenes, low-density polyethylenes, medium-density polyethylenes, high-density polyethylenes, ionomers, ethylene-propylene copolymers, polypropylenes, polybutenes, and polypentenes; polyolefin resins in a broader sense such as polycycloolefins, and modified polyolefin resins obtained by graft-modifying any of the aforementioned olefin homopolymers and copolymers with an unsaturated carboxylic acid or an unsaturated carboxylic acid ester; and polystyrene resins, polyesters, polyvinyl chlorides, polyvinylidene chlorides, acrylic resins, vinyl ester resins, chlorinated polyethylenes, and chlorinated polypropylenes.

Out of the polyolefin resins, α-olefins may be plant-derived α-olefins derived from bioethanol, or may be non-plant-derived α-olefins, i.e., petroleum-derived α-olefins. Two or more of these may be used in combination. Since various kinds of petroleum-derived α-olefins are available, the properties of the polyolefin resin can be easily adjusted by using any of these α-olefins for the production of the polyolefin resin. With the use of the plant-derived α-olefins, the biomass degree of the final product can be further increased, thereby reducing the environmental load.

In a plant-derived ethylene and plant-derived α-olefin production method, a plant-derived ethylene and plant-derived α-olefins (1-butene, 1-hexene, and the like) can be produced in a conventional manner by fermenting sugar liquid and starch obtained from a plant such as sugarcane, corn or sweet potato by microbes such as yeast to produce bioethanol, heating the bioethanol in the presence of a catalyst, and subjecting the bioethanol to intramolecular dehydration reaction or the like. With the use of the plant-derived ethylene and the plant-derived α-olefins thus produced, the plant-derived polyethylene resin can be produced in the same manner as in the production of the petroleum-derived polyethylene resin.

Production methods for the plant-derived ethylene, the plant-derived α-olefins, and the plant-derived polyethylene resin are described in detail, for example, in JP-A-2011-506628. A plant-derived polyethylene resin to be preferably used in the present disclosure is Green PE available from Braskem S.A., and the like.

<Other Additives>

Known additives to be generally added to EVOH resin compositions may be added to the EVOH resin composition of the present disclosure in amounts that do not impair the effect of the present disclosure (e.g., typically in amounts of not greater than 10 wt.%, preferably not greater than 5 wt.%, based on the overall amount of the EVOH resin composition). Examples of the additives include heat stabilizer, antioxidant, antistatic agent, colorant, UV absorber, lubricant such as saturated fatty acid amide (e.g., stearamide or the like), unsaturated fatty acid amide (e.g., oleamide or the like), bis-fatty acid amide (e.g., ethylene bis-stearamide or the like), low-molecular weight polyolefin (e.g., low-molecular weight polyethylene or low-molecular weight polypropylene having a molecular weight of about 500 to about 10,000), plasticizer (e.g., aliphatic polyhydric alcohol such as ethylene glycol, glycerin, hexanediol or the like), photo stabilizer, surfactant, antibacterial agent, desiccant, insoluble inorganic salt (e.g., hydrotalcites or the like), filler (e.g., inorganic filler or the like), antiblocking agent, flame retardant, crosslinking agent, foaming agent, crystal nucleating agent, antifogging agent, biodegradation agent, silane coupling agent, oxygen absorber, phosphoric acid and/or its salt, cinnamic acid and/or its salt, conjugated polyene compound, enediol group-containing compound (e.g., phenol such as propyl gallate or the like), and aldehyde compound (e.g., unsaturated aldehyde such as crotonaldehyde). These may be each used alone, or two or more of these may be used in combination.

Specific examples of the phosphoric acid and/or its salt include phosphoric acid, sodium dihydrogen phosphate, disodium hydrogen phosphate, potassium dihydrogen phosphate, dipotassium hydrogen phosphate, tripotassium phosphate, calcium hydrogen phosphate, calcium dihydrogen phosphate, tricalcium phosphate, magnesium phosphate, magnesium hydrogen phosphate, manganese dihydrogen phosphate, zinc hydrogen phosphate, barium hydrogen phosphate, and manganese hydrogen phosphate. These may be each used alone, or two or more of these may be used in combination. Of these, phosphoric acid, sodium dihydrogen phosphate, potassium dihydrogen phosphate, calcium dihydrogen phosphate, magnesium dihydrogen phosphate, and zinc hydrogen phosphate are preferred, and phosphoric acid, sodium dihydrogen phosphate, calcium dihydrogen phosphate, and magnesium dihydrogen phosphate are particularly preferred. Phosphoric acid is especially preferred.

The amount of the phosphoric acid and/or its salt is typically 0.01 to 3,000 ppm, preferably 0.05 to 2,000 ppm, more preferably 0.1 to 1,000 ppm, based on the overall amount of the EVOH resin composition.

Specific examples of the cinnamic acid and/or its salt include cis-cinnamic acid and trans-cinnamic acid. The trans-cinnamic acid is preferably used from the viewpoint of stability and price. Examples of the cinnamic acid salt include cinnamic acid alkali metal salts such as lithium cinnamate, sodium cinnamate, and potassium cinnamate, and cinnamic acid alkaline earth metal salts such as magnesium cinnamate, calcium cinnamate, and barium cinnamate. These cinnamic acids and/or cinnamic acid salts may be each used alone, or two or more of these cinnamic acids and/or cinnamic acid salts may be used in combination. Of these, trans-cinnamic acid is preferably used alone.

The amount of the cinnamic acid and/or its salt is typically 1 to 1,200 ppm, preferably 1 to 1,000 ppm, more preferably 10 to 800 ppm, still more preferably 15 to 500 ppm, based on the overall amount of the EVOH resin composition.

The conjugated polyene compound is a compound having a so-called conjugated double bond structure containing two or more carbon-carbon double bonds alternating with one or more carbon-carbon single bonds. The conjugated polyene compound may be a conjugated diene having a structure containing two carbon-carbon double bonds alternating with one carbon-carbon single bond, a conjugate triene having a structure containing three carbon-carbon double bonds alternating with two carbon-carbon single bonds, or a conjugated polyene compound having a structure containing more than three carbon-carbon double bonds alternating with more than two carbon-carbon single bonds. If the number of conjugated carbon-carbon double bonds is 8 or more, however, a formed product is liable to be colored due to the color of the conjugated polyene compound itself. Therefore, the conjugated polyene compound is preferably a polyene such that the number of conjugated carbon-carbon double bonds is not greater than 7. The conjugated polyene compound may contain plural sets of conjugated double bonds each containing two or more carbon-carbon double bonds in an unconjugated state in each molecule thereof. For example, the conjugated polyene compound may include a compound containing three conjugated trienes in each molecule, such as tung oil.

Specific examples of the conjugated polyene compound include: conjugated diene compounds, such as isoprene, myrcene, farnesene, cembrene, sorbic acid, sorbic acid esters, sorbic acid salts, and abietic acid, each containing two carbon-carbon double bonds; conjugated triene compounds, such as 1,3,5-hexatriene, 2,4,6-octatriene-1-carboxylic acid, eleostearic acid, tung oil, and cholecalciferol, each containing three carbon-carbon double bonds; and conjugated polyene compounds, such as cyclooctatetraene, 2,4,6,8-decatetraene-1-carboxylic acid, retinol, and retinoic acid, each containing four or more carbon-carbon double bonds. These conjugated polyene compounds may be each used alone, or two or more of these conjugated polyene compounds may be used in combination.

The amount of the conjugated polyene compound is typically 0.01 to 10,000 ppm, preferably 0.1 to 1,000 ppm, particularly preferably 0.5 to 500 ppm, based on the overall amount of the EVOH resin composition. The conjugated polyene compound is preferably preliminarily added to the EVOH (A).

The heat stabilizer is added for improvement of heat stability and other various physical properties during the melt forming. Examples of the heat stabilizer include organic acids such as propionic acid, butyric acid, lauric acid, stearic acid, oleic acid, and behenic acid (which are not regarded as the heat stabilizer if being used as the aliphatic carboxylic acid (D)). Other examples of the heat stabilizer include alkali metal salts (sodium salts, potassium salts, and the like) of the organic acids, and alkaline earth metal salts (calcium salts, magnesium salts, and the like) of the organic acids. These may be each used alone, or two or more of these may be used in combination.

Examples of the inorganic filler include hydrotalcite compound, mica, talc, calcium carbonate, titanium oxide, kaolin, clay, glass flakes, glass beads, vermiculite, and smectite. These may be each used alone, or two or more of these may be used in combination.

An example of the hydrotalcite compound is a hydrotalcite solid solution represented by the following general formula (7):

$$[(M_1^{2+})_{y1}(M_2^{2+})_{y2}]_{1-x}M^{3+}_x (OH)_2 A^{n-}_{x/n} \bullet mH_2O \ \ldots\ldots (7)$$

wherein $M_1^{2+}$ is at least one metal selected from Mg, Ca, Sr, and Ba, $M_2^{2+}$ is at least one metal selected from Zn, Cd, Pb, and Sn, $M^{3+}$ is a trivalent metal, $A^{n-}$ is an n-valent anion, and x, y1, y2, and m are positive numbers satisfying $0 < x \leq 0.5$, $0.5 < y1 < 1$, $y1 + y2 = 1$, and $0 \leq m < 2$.

In the above general formula (7), $M_1^{2+}$ is preferably Mg or Ca, and $M_2^{2+}$ is preferably Zn or Cd. Examples of $M^{3+}$ include Al, Bi, In, Sb, B, Ga, and Ti. These may be each used alone, or two or more of these may be used in combination. Particularly, Al is practical as $M^{3+}$. Examples of $A^{n-}$ in the above general formula (7) include $CO_3^{2-}$, $OH^-$, $HCO_3^-$, salicylate ion, citrate ion, tartrate ion, $NO_3^-$, $I^-$, $(OOC-COO)^{2-}$, $ClO^{4-}$, $CH_3COO^-$, $CO_3^{2-}$, $(OOCHC=CHCOO)^{2-}$, and $[Fe(CN)_6]^{4-}$. These may be each used alone, or two or more of these may be used in combination. In particular, $CO_3^{2-}$ and $OH^-$ are useful.

Specific examples of the hydrotalcite solid solution include $[Mg_{0.75}Zn_{0.25}]_{0.67}Al_{0.33}(OH)_2(CO_3)_{0.165} \bullet 0.45H_2O$, $[Mg_{0.79}Zn_{0.21}]_{0.7}Al_{0.3}(OH)_2(CO_3)_{0.15}$, $[Mg_{1/7}Ca_{3/7}Zn_{3/7}]_{0.7}Al_{0.3}(OH)_2(OOCHC=CHCOO)_{0.15} \bullet 0.41H_2O$, $[Mg_{6/7}Cd_{1/7}]_{0.7}Al_{0.3}(OH)_2(CH_3COO)_{0.3} \bullet 0.34H_2O$, $[Mg_{5/7}Pd_{2/7}]_{0.7}Al_{0.30}(OH)_2(CO_3)_{0.15} \bullet 0.52H_2O$, $[Mg_{0.74}Zn_{0.26}]_{0.68}Al_{0.32}(OH)_2(CO_3)_{0.16}$, $[Mg_{0.56}Zn_{0.44}]_{0.68}Al_{0.32}(OH)_2(CO_3)_{0.16} \bullet 0.2H_2O$, $[Mg_{0.81}Zn_{0.19}]_{0.74}Al_{0.26}(OH)_2(CO_3)_{0.13}$, $[Mg_{0.75}Zn_{0.25}]_{0.8}Al_{0.20}(OH)_2(CO_3)_{0.10} \bullet 0.16H_2O$, $[Mg_{0.71}Zn_{0.29}]_{0.7}Al_{0.30}(OH)_2(NO_3)_{0.30}$, $[Mg_{0.71}Zn_{0.29}]_{0.7}Al_{0.30}(OH)_2(OOCHC=CHCOO)_{0.15}$, and $[Mg_{0.14}Ca_{0.57}Zn_{0.28}]_{0.7}Al_{0.30}(OH)_{2.3} \bullet 0.25H_2O$. Of these, $[Mg_{0.75}Zn_{0.25}]_{0.67}Al_{0.33}(OH)_2(CO_3)_{0.165} \bullet 0.45H_2O$, $[Mg_{0.79}Zn_{0.21}]_{0.7}Al_{0.3}(OH)_2(CO_3)_{0.15}$, $[Mg_{6/7}Cd_{1/7}]_{0.7}Al_{0.3}(OH)_2(CH_3COO)_{0.3} \bullet 0.34H_2O$, and $[Mg_{5/7}Pd_{2/7}]_{0.7}Al_{0.30}(OH)_2(CO_3)_{0.15} \bullet 0.52H_2O$ are preferred.

Another example of the hydrotalcite compound is a compound represented by the following general formula (8):

$$M_xAl_y(OH)_{2x+3y-2z}(E)_z \bullet aH_2O \ \ldots\ldots (8)$$

wherein M is Mg, Ca or Zn, E is $CO_3$ or $HPO_4$, x, y, z are positive numbers, and a is 0 or a positive number.

Specific examples of the compound represented by the above general formula (8) include $Mg_{4.5}Al_2(OH)_{13}CO_3 \bullet 3.5H_2O$, $Mg_5Al_2(OH)_{14}CO_3 \bullet 4H_2O$, $Mg_6Al_2(OH)_{16}CO_3 \bullet 4H_2O$, $Mg_8Al_2(OH)_{20}CO_3 \bullet 5H_2O$, $Mg_{10}Al_2(OH)_{22}(CO_3)_2 \bullet 4H_2O$, $Mg_6Al_2(OH)_{16}HPO_4 \bullet 4H_2O$, $Ca_6Al_2(OH)_{16}CO_3 \bullet 4H_2O$, and $Zn_6Al_6(OH)_{16}CO_3 \bullet 4H_2O$. Further, the hydrotalcite compound is not limited to these compounds, but a compound having an indefinite chemical formula, for example, with some of the OH groups substituted by $CO_3$ or $HPO_4$ in $Mg_2Al(OH)_9 \bullet 3H_2O$ or even with the crystal water removed (a = 0) in the above general formula (8) may be used, which is expected to provide comparable effects. Particularly, a compound represented by the above general formula (8) wherein M is Mg and E is $CO_3$ is preferred from the viewpoint of the heat stability and the color tone of the resin composition.

The hydrotalcite compound typically has an average particle diameter of, for example, not greater than 10 $\mu$m, more preferably not greater than 5 $\mu$m, particularly preferably not greater than 1 $\mu$m. The average particle diameter is herein measured by the LUZEX method.

Of the aforementioned hydrotalcite compounds, the hydrotalcite solid solution represented by the above general formula (7) is preferably used because it ensures excellent forming stability.

The inorganic filler other than the hydrotalcite compound preferably has an average particle diameter of 1 to 20 $\mu$m, more preferably 3 to 18 $\mu$m, particularly preferably 5 to 15 $\mu$m from the viewpoint of the formability.

The amount of the inorganic filler is typically 0.001 to 30 wt.%, more preferably 0.005 to 20 wt.%, particularly preferably 0.01 to 10 wt.% , based on the overall amount of the resin composition.

Examples of the antioxidant include: hindered phenol compounds such as dibutylhydroxytoluene, 2,5-di-t-butylhydroquinone, 2,6-di-t-butyl-p-cresol, 4,4'-thiobis(6-t-butylphenol), 2,2'-methylene-bis(4-methyl-6-t-butylphenol), tetrakis[methylene-3-(3',5'-di-t-butyl-4'-hydroxyphenyl)propionate] methane, N,N'-hexamethylene-bis(3,5-di-t-butyl-4'-hydroxyhydrocinnamide), 1,3,5-trimethyl-2,4,6-tris(3,5-di-t-butyl-4-hydroxybenzyl)benzene, pentaerythritol tetrakis[3-(3,5-di-t-butyl-4-hydroxyphenyl)propionate, triethylene glycol bis[3-(3-t-butyl-5-methyl-4-hydroxyphenyl)propionate], 1,6-hexanediol bis[3-(3,5-dit-butyl-4-hydroxyphenyl)propionate], 2,4-bis(n-octylthio)-6-(4-hydroxy-3,5-di-t-butylanilino)-1,3,5-triazine, 2,2-thiodiethylene-bis[3-(3,5-di-t-butyl-4-hydroxyphenyl)propionate], octadecyl 3-(3,5-di-t-butyl-4-hydroxyphenyl)propionate, diethyl 3,5-di-t-butyl-4-hydroxybenzylphosphonate, calcium bis(ethyl 3,5-di-t-butyl-4-hydroxybenzylphosphonate), tris(3,5-di-t-butyl-4-hydroxybenzyl) isocyanurate, 2,4-bis[(octylthio)methyl]-o-cresol, isooctyl 3-(3,5-di-t-butyl-4-hydroxyphenyl)propionate, n-octadecyl 3-(3,5-di-t-butyl-4-hydroxyphenyl)propionate, 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 4,4'-butylidene bis(3-methyl-6-t-butylphenol), 4,4'-thiobis(3-methyl-6-t-butylphenol), and 3,9-bis{2-[3-(3-t-butyl-4-hydroxy-5-methylphenyl)-propionyloxy]-1,1-dimethylethyl}-2,4,8,10-tetraoxaspiro(5.5)undecane; phosphite compounds including triaryl phosphites such as triphenyl phosphite, tris(p-nonylphenyl) phosphite, and tris(2,4-di-t-butylphenyl) phosphite, monoalkyl diphenyl phosphites such as diphenyl isooctyl phosphite and diphenyl isodecyl phosphite, dialkyl monophenyl phosphites such as phenyl diisooctyl phosphite and phenyl diisodecyl phosphite, and other alkyl aryl phosphites, trialkyl phosphites such as triisooctyl phosphite and tristearyl phosphite, and bis(2,4-di-t-butylphenyl) pentaerythritol diphosphite; thioether compounds such as pentaerythritol tetrakis($\beta$-laurylthiopropionate), tetrakis[methylene-3-(dodecylthio)propionate] methane, bis[2-methyl-4-{3-n-alkylthiopropionyloxy}-5-t-butylphenyl] sulfide, dilauryl 3,3'-thiodipropionate, dimyristyl 3,3'-thiodipropionate, distearyl 3,3'-thiodipropionate, pentaerythritol tetrakis(3-laurylthiopropionate), ditridecyl 3,3'-thiodipropionate, and 2-mercaptobenzimidazole; hindered amine compounds such as polycondensation product of dimethyl succinate and 1-(2-hydroxyethyl)-4-hydroxy-2,2,6,6-tetramethylpiperidine, poly[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino], condensation product of N,N'-bis(3-aminopropyl)ethylenediamine and 2,4-bis[N-butyl-N-(1,2,2,6,6-pentamethyl-4-piperidyl)amino]-6-chloro-1,3,5-triazine, bis(2,2,6,6-tetramethyl-4-piperidyl) sebacate, bis(1,2,2,6,6-pentamethyl-4-piperidinyl) sebacate, and bis(1,2,2,6,6-pentamethyl-4-piperidyl) 2-(3,5-di-t-butyl-4-hydroxybenzyl)-2-n-butylmalonate; benzotriazole compounds such as 2-(5-methyl-2-hydroxyphenyl)benzotriazole, 2-[2-hydroxy-3,5-bis($\alpha$,$\alpha$-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)-5-benzotriazole, 2-(2'-hydroxy-5'-t-octylphenyl)benzotriazole, condensation product of methyl 3-[3-t-butyl-5-(2H-benzotriazole-2-yl)-4-hydroxyphenyl]propionate and polyethylene glycol, hydroxyphenylbenzotriazole derivative, and 2-[2-hydroxy-3-(3,4,5,6-tetrahydrophthalamide-methyl)-5-methylphenyl]benzotriazole; benzophenone compounds such as 2-hydroxy-4-methoxybenzophenone, 2-hydroxy-4-octyloxybenzophenone, and 2,2',4,4'-tetrahydroxybenzophenone. The antioxidant may be at least one selected from these antioxidants. The antioxidant may be used in any form, e.g., powdery form, particulate form, liquid form, paste form, emulsion form or the like.

OF these, the hindered phenol antioxidants are preferred, and pentaerythritol tetrakis-3-(3,5-di-t-butyl-4-hydroxyphenyl)propionate and octadecyl 3-(3,5-di-t-butyl-4-hydroxyphenyl)propionate are preferably used because they are excellent in the effect of suppressing the thermal deterioration of the resin composition.

The amount of the antioxidant is typically 0.001 to 10 wt.%, preferably 0.005 to 5 wt.%, particularly preferably 0.01 to 3 wt.%, based on the overall amount of the resin composition.

<Method for Producing EVOH Resin Composition>

The method for producing the EVOH resin composition of the present disclosure is not particularly limited, and examples of the method include the following methods (I) to (IV). Two or more of the methods (I) to (IV) may be used in combination.

(I) A method (dry blending method) in which a predetermined amount of at least one selected from the group consisting of the acetic acid and/or its salt (C), the aliphatic carboxylic acid (D), and the aliphatic carboxylic acid metal salt (E) is dry-blended with pellets of the EVOH (A) and/or the polyamide resin (B).

(II) A method (immersing method) in which pellets of the EVOH (A) and/or the polyamide resin (B) are immersed in a solution containing at least one selected from the group consisting of the acetic acid and/or its salt (C), the aliphatic carboxylic acid (D), and the aliphatic carboxylic acid metal salt (E), and then the resulting pellets are dried.

(III) A method (melt kneading method) in which at least one selected from the group consisting of the acetic acid and/or its salt (C), the aliphatic carboxylic acid (D), and the aliphatic carboxylic acid metal salt (E) is blended with the EVOH (A) and/or the polyamide resin (B) during melt kneading, and then the resulting melt is pelletized.

(IV) A method (solution mixing method) in which at least one selected from the group consisting of the acetic acid and/or its salt (C), the aliphatic carboxylic acid (D), and the aliphatic carboxylic acid metal salt (E) is added to and mixed with a solution containing the EVOH (A) and/or the polyamide resin (B), and then the solvent is removed from the solution.

Of these methods, the method (III) (melt kneading method) in which the at least one selected from the group consisting of the acetic acid and/or its salt (C), the aliphatic carboxylic acid (D), and the aliphatic carboxylic acid metal salt (E) is blended with the EVOH (A) and/or the polyamide resin (B) during the melt kneading, and then the resulting melt is pelletized is practical in terms of productivity and economy, and is industrially preferred. The other additives may be optionally blended in the EVOH resin composition in substantially the same manner as in the methods (I) to (IV), whereby the EVOH resin composition can be produced as containing the optional additives.

A known mixing device such as rocking mixer, ribbon blender or line mixer can be used for the dry blending in the method (I).

In order to improve the adhesion of the at least one selected from the group consisting of the acetic acid and/or its salt (C), the aliphatic carboxylic acid (D), and the aliphatic carboxylic acid metal salt (E) to the pellets of the EVOH (A) and/or the polyamide resin (B) in the dry blending in the method (I), the water content of the pellets is preferably adjusted to 0.1 to 5 wt.%, more preferably 0.5 to 4 wt.%, particularly preferably 1 to 3 wt.%. If the water content is excessively low, the at least one selected from the group consisting of the acetic acid and/or its salt (C), the aliphatic carboxylic acid (D), and the aliphatic carboxylic acid metal salt (E) is liable to be separated from the pellets, so that the adhering distribution tends to be nonuniform. If the water content is excessively high, the at least one selected from the group consisting of the acetic acid and/or its salt (C), the aliphatic carboxylic acid (D), and the aliphatic carboxylic acid metal salt (E) is liable to agglomerate, so that the adhering distribution tends to be nonuniform.

The water content of the pellets of the EVOH (A) and/or the polyamide resin (B) is measured and calculated by the following method.

[Water Content Measuring Method]

After the total weight (W1 (g)) of the pellets of the EVOH (A) and/or the polyamide resin (B) is measured by an electronic balance, and the pellets are dried in a hot air oven dryer maintained at 150°C for 5 hours. Then, the pellets are cooled in a desiccator for 30 minutes, and the total weight (W2 (g)) of the pellets is measured in the same manner. The water content is calculated from the following expression:

$$\text{Water content (\%)} = \{(W1 - W2)/W1\} \times 100$$

In the methods (I) and (II), it is possible to provide the pellets of the EVOH (A) and/or the polyamide resin (B) on which the at least one selected from the group consisting of the acetic acid and/or its salt (C), the aliphatic carboxylic acid (D), and the aliphatic carboxylic acid metal salt (E) adheres.

A known melt-kneading device such as kneader, extruder, mixing roll, Banbury mixer or Plast mill may be used for the melt kneading in the method (III). The melt kneading is typically performed at 150°C to 300°C, (preferably 180°C to 280°C), for about 1 to about 20 minutes. Particularly, it is industrially advantageous to use a single screw extruder or a twin screw extruder, because the pellets can be easily produced. As required, the extruder is preferably provided with a vent suction device, a gear pump device, a screen device, and/or the like. Particularly, the extruder may be provided with one or more vent holes for suction under a reduced pressure for removal of water and side products (thermally decomposed low-molecular weight substances, and the like). Further, an inert gas such as nitrogen may be continuously fed into a hopper for prevention of intrusion of oxygen into the extruder. Thus, the EVOH resin composition can be provided, which has a higher quality with the thermal coloration and the thermal degradation suppressed.

The method for feeding the ingredients into the melt-kneading device such as the extruder is not particularly limited. Exemplary methods for the feeding include:

(1) a method in which the EVOH (A), the polyamide resin (B), the acetic acid and/or its salt (C), the aliphatic carboxylic acid (D), and the aliphatic carboxylic acid metal salt (E) are dry-blended, and collectively fed into the extruder;

(2) a method (solid side feeding method) in which the EVOH (A) and/or the polyamide resin (B) is fed and melted in the extruder, and the acetic acid and/or its salt (C), the aliphatic carboxylic acid (D), and the aliphatic carboxylic acid metal salt (E) are fed in a solid state into the resulting melt; and

(3) a method (melt side feeding method) in which the EVOH (A) and/or the polyamide resin (B) is fed and melted in the extruder, and the acetic acid and/or its salt (C), the aliphatic carboxylic acid (D), and the aliphatic carboxylic acid metal salt (E) are fed in a molten state into the resulting melt. Particularly, the method (1) is practical because of the simplicity of the device and the costs of the blend.

A known method may be used for the formation of pellets after the melt kneading. Examples of the method include strand cutting method, and hot cutting method (in-air cutting method and underwater cutting method). The strand cutting method is preferred from the viewpoint of the industrial productivity.

A known good solvent for the EVOH may be used as the solvent for the solution mixing in the method (IV). Typical examples of the solvent include mixed solvents containing water and C1 to C4 aliphatic alcohols. A mixed solvent containing water and methanol is preferred. The EVOH (A) and/or the polyamide resin (B) may be dissolved at any desired concentration in the solvent with heating and/or pressurization as required. The acetic acid and/or its salt (C), the aliphatic carboxylic acid (D), and the aliphatic carboxylic acid metal salt (E) may be blended with a solution or a paste containing the EVOH (A) and/or the polyamide resin (B). In this case, the acetic acid and/or its salt (C), the aliphatic carboxylic acid (D), and the aliphatic carboxylic acid metal salt (E) to be blended may be in a solid state, a solution state, or a dispersion state.

After the blending, the EVOH resin composition solution or paste is stirred homogeneously, and formed into pellets by any of the aforementioned known methods. In terms of the industrial productivity, the underwater cutting method is preferred. The pellets thus formed are dried by a known method.

The pellets may each have any desired shape, for example, spherical shape, oval shape, cylindrical shape, cubic shape, square prism shape, or the like, and typically each have the oval shape or the cylindrical shape. For easy handling of the pellets in the subsequent use as a forming material, the oval pellets typically each have a minor diameter of 1 to 6 mm and a major diameter of 1 to 6 mm, preferably a minor diameter of 2 to 5 mm and a major diameter of 2 to 5 mm. The cylindrical pellets typically each have a bottom diameter of 1 to 6 mm and a length of 1 to 6 mm, preferably a bottom diameter of 2 to 5 mm and a length of 2 to 5 mm.

Thus, the EVOH resin composition of the present disclosure can be produced.

<Multilayer Structure>

A multilayer structure of the present disclosure includes at least one layer formed from the EVOH resin composition of the present disclosure. The layer formed from the EVOH resin composition of the present disclosure (hereinafter referred to simply as "EVOH resin composition layer") may be laminated with some other base material to be thereby imparted with higher strength and additional functions.

Preferred examples of the other base material include a layer of an adhesive resin (hereinafter referred to simply as "adhesive resin layer"), a layer of a polyamide resin (hereinafter referred to simply as "polyamide layer"), and a layer of a thermoplastic resin other than the EVOH (hereinafter referred to simply as "thermoplastic resin layer").

Where the EVOH resin composition layer $\alpha$ ($\alpha$1, $\alpha$2, ...), the adhesive resin layers $\beta$ ($\beta$1, $\beta$2, ...), the polyamide layer $\gamma$ ($\gamma$1, $\gamma$2, ...), and the thermoplastic resin layer $\delta$ ($\delta$1, $\delta$2, ...) are laminated together, the laminate configuration of the multilayer structure of the present disclosure may be any combination of these layers, e.g., $\alpha/\beta/\delta$, $\alpha$1/$\beta$/$\alpha$2, $\alpha$1/$\alpha$2/$\alpha$3, $\delta$1/$\beta$/$\alpha$/$\delta$2, $\delta$/$\alpha$1/$\beta$/$\alpha$2, $\delta$1/$\beta$1/$\alpha$/$\beta$2/$\delta$2, $\delta$1/$\beta$1/$\alpha$1/$\alpha$2/$\alpha$3/$\beta$2/$\delta$2, $\delta$1/$\alpha$1/$\beta$/$\alpha$2/$\delta$2, $\delta$/$\alpha$1/$\beta$/$\alpha$2/$\gamma$, $\delta$1/$\beta$1/$\alpha$1/$\beta$2/$\alpha$2/$\beta$3/$\delta$2, $\gamma$1/$\alpha$/$\gamma$2, $\gamma$/$\alpha$/$\beta$, $\gamma$/$\alpha$/$\beta$/$\delta$, $\alpha$1/$\beta$/$\alpha$2/$\gamma$, $\delta$1/$\beta$/$\alpha$/$\gamma$/$\delta$2, $\delta$/$\alpha$1/$\beta$/$\delta$2/$\gamma$, $\delta$1/$\beta$1/$\alpha$/$\gamma$/$\beta$2/$\delta$2, $\delta$1/$\beta$1/$\gamma$1/$\alpha$/$\gamma$2/$\beta$2/$\delta$2, $\delta$1/$\alpha$1/$\beta$/$\alpha$2/$\gamma$/$\delta$2, $\delta$1/$\beta$1/$\alpha$1/$\gamma$1/$\beta$2/$\alpha$2/$\gamma$2/$\beta$3/$\delta$2, or the like. In the laminate configuration, layers stacked in one direction on one side of a given EVOH resin composition layer ($\alpha$) and layers stacked in the other direction on the other side of the EVOH resin composition layer ($\alpha$) may have the same layered configuration (may be symmetrically configured), or may have different layered configurations (may be asymmetrically configured). Further, the total thickness of the layers stacked in the one direction on the one side of the EVOH resin composition layer ($\alpha$) and the total thickness of the layers stacked in the other direction on the other side of the EVOH resin composition layer ($\alpha$) may be the same (symmetrical), or may be different (asymmetrical).

Where the multilayer structure further includes a recycle layer R (R1, R2, ...) formed from a mixture of the EVOH resin composition of the present disclosure, the adhesive resin, the polyamide resin, and the thermoplastic resin obtained by re-melting cutoff pieces and defective products recovered in the production of the multilayer structure, possible combinations of the layers for the laminate configuration include $\delta$/R/$\beta$/$\alpha$, $\alpha$1/R/$\alpha$2/$\alpha$3, $\delta$/R/$\alpha$1/$\beta$/$\alpha$2, $\delta$1/R/$\alpha$/$\beta$/$\delta$2, R1/$\alpha$1/$\beta$/$\alpha$2/R2, R1/$\alpha$1/$\alpha$2/$\alpha$3/R2, $\delta$1/R1/$\beta$1/$\alpha$/$\beta$2/R2/$\delta$2, $\delta$1/R1/$\beta$1/$\alpha$1/$\alpha$2/$\alpha$3/$\beta$2/R2/$\delta$2, $\delta$1/R1/$\alpha$1/$\beta$/$\alpha$2/R2/$\delta$2, $\delta$1/$\beta$1/$\alpha$1/$\beta$2/R/$\beta$3/$\alpha$2/$\beta$4/$\delta$2, $\delta$/R/$\beta$/$\alpha$/$\gamma$, $\delta$/R/$\gamma$/$\alpha$1/$\beta$/$\alpha$2, $\delta$1/R/$\gamma$/$\alpha$/$\beta$/$\delta$2, P1/$\gamma$/$\alpha$1/$\beta$/$\alpha$2/R2, $\delta$1/R1/$\beta$1/$\gamma$/$\alpha$/$\beta$2/R2/$\delta$2, $\delta$1/R1/$\gamma$1/$\alpha$1/$\beta$/$\alpha$2/$\gamma$2/R2/$\delta$2, and the like.

Examples of the polyamide resin to be used for the polyamide layer include those described for the polyamide resin (B) in the present disclosure.

Examples of the thermoplastic resin other than the EVOH include: (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-$\alpha$-olefin (C4 to C20 $\alpha$-olefin) copolymers, polypropylene resins such as polypropylenes and propylene-$\alpha$-olefin (C4 to C20 $\alpha$-olefin) copolymers, polybutenes, polypentenes, and polycycloolefin resins (polymers having a cycloolefin structure in a main chain and/or a side chain thereof); polyolefin resins in a broader sense including modified olefin resins such as unsaturated carboxyl-modified polyolefin resins obtained by graft-modifying any of the aforementioned polyolefin resins with an unsaturated carboxylic acid or an unsaturated carboxylic acid ester; and ionomers, ethylene-vinyl acetate copolymers, ethylene-acrylic acid copolymers, ethylene-acrylate copolymers, polyester resins, polyvinyl chlorides, polyvinylidene chlorides, acrylic resins, polystyrene resins, vinyl ester resins, polyester elastomers, polyurethane elastomers, halogenated polyolefins such as chlorinated polyethylenes and chlorinated polypropylenes, and aromatic and aliphatic polyketones. These may be each used alone, or two or more of these may be used in combination.

In consideration of the hydrophobicity, the polyolefin resins, the polyester resins, and the polystyrene resins, which are hydrophobic resins, are preferred out of the aforementioned resins, and the polyolefin resins such as the polyethylene resins, the polypropylene resins, the polycycloolefin resins, and the unsaturated carboxyl-modified polyolefin resins obtained by modification of these polyolefin resins are more preferred. Particularly, the polycycloolefin resins are preferably used as the hydrophobic resin.

Out of the polyolefin resins, the $\alpha$-olefins may be plant-derived $\alpha$-olefins derived from bioethanol, or may be non-plant-derived $\alpha$-olefins (i.e., petroleum-derived $\alpha$-olefins. Two or more of these may be used in combination. Since various kinds of petroleum-derived $\alpha$-olefins are available, the properties of the polyolefin resin can be easily adjusted by using any of these $\alpha$-olefins for the production of the polyolefin resin. With the use of the plant-derived $\alpha$-olefins, the biomass degree of the final product can be further increased, thereby reducing the environmental load.

In a plant-derived ethylene and plant-derived $\alpha$-olefin production method, a plant-derived ethylene and plant-derived $\alpha$-olefins (1-butene, 1-hexene, and the like) can be produced in a conventional manner by fermenting sugar liquid and starch obtained from a plant such as sugarcane, corn or sweet potato by microbes such as yeast to produce bioethanol, heating the bioethanol in the presence of a catalyst, and subjecting the bioethanol to intramolecular dehydration reaction or the like. With the use of the plant-derived ethylene and the plant-derived $\alpha$-olefins thus produced, the plant-derived polyethylene resin can be produced in the same manner as in the production of the petroleum-derived polyethylene resin.

Production methods for the plant-derived ethylene, the plant-derived $\alpha$-olefins, and the plant-derived polyethylene resin are described in detail, for example, in JP-A-2011-506628. A plant-derived polyethylene resin to be preferably used in the present disclosure is Green PE available from Braskem S.A., and the like.

A known adhesive resin may be used as a material for forming the adhesive resin layer. The adhesive resin may be properly selected according to the type of the other thermoplastic resin to be used for the base material. The adhesive resin is typically a carboxyl-containing modified polyolefin polymer prepared by chemically bonding an unsaturated carboxylic acid or its anhydride to a polyolefin resin by an addition reaction, a graft reaction or the like. Examples of the carboxyl-containing modified polyolefin polymer include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be each used alone, or two or more of these may be used in combination.

In this case, the amount of the unsaturated carboxylic acid or its anhydride to be contained is typically 0.001 to 3 wt.%, preferably 0.01 to 1 wt.%, particularly preferably 0.03 to 0.5 wt.%, based on the overall amount of the adhesive resin. If the modification degree of the modification product is small, the adhesiveness tends to be insufficient. If the modification degree is excessively great, a crosslinking reaction tends to occur, thereby deteriorating the formability.

The EVOH (A), the polyamide resin (B), a rubber/elastomer component such as polyisobutylene or ethylene-propylene rubber, and/or the resin for the polyolefin resin layer may be blended in the adhesive resin. Particularly, a polyolefin resin different from the base polyolefin resin for the adhesive resin may be blended in the adhesive resin.

The adhesive resin layer, the polyamide layer, and the thermoplastic resin layer may each further contain the acetic acid and/or its salt (C), the aliphatic carboxylic acid (D), the aliphatic carboxylic acid metal salt (E), and the boric acid and/or its salt (F) to be used in the present disclosure as well as a conventionally known additive in amounts that do not impair the effect of the present disclosure (e.g., in amounts of not greater than 30 wt.%, preferably not greater than 10 wt.%). Examples of the additive include plasticizer (ethylene glycol, glycerin, hexanediol or the like), filler, clay (montmorillonite or the like), colorant, antioxidant, antistatic agent, lubricant (e.g., alkali metal salt or alkaline earth metal salt of C8 to C30 higher fatty acid, higher fatty acid ester (methyl ester, isopropyl ester, butyl ester, octyl ester or the like of higher fatty acid), higher fatty acid amide (saturated fatty acid amide such as stearamide or behenamide, unsaturated fatty acid amide such as oleamide or erucamide, or bis-fatty acid amide such as ethylene bis-stearamide, ethylene bis-oleamide, ethylene bis-erucamide or ethylene bis-lauramide), low-molecular weight polyolefin (e.g., low-molecular weight polyethylene or low-molecular weight polypropylene having a molecular weight of about 500 to about 10,000), fluorinated ethylene resin or the like), nucleating agent, antiblocking agent, UV absorber, and wax. These may be each used alone, or two or more of these may be used in combination.

In the present disclosure, at least one selected from the group consisting of the acetic acid and/or its salt (C), the aliphatic carboxylic acid (D), the aliphatic carboxylic acid metal salt (E), and the boric acid and/or its salt (F) is preferably blended with the resin to be used for the adhesive resin layer and/or the polyamide layer. Particularly, where the adhesive resin layer and/or the polyamide layer adjacent to the EVOH resin composition layer in the multilayer structure of the present disclosure contains the acetic acid and/or its salt (C), the aliphatic carboxylic acid (D), the aliphatic carboxylic acid metal salt (E), and the boric acid and/or its salt (F), the multilayer structure can be provided as having more excellent impact resistance.

For production of the multilayer structure, the EVOH resin composition layer and the other base material layer may be laminated together by a known laminating method. Examples of the laminating method include: a method in which a film or a sheet of the EVOH resin composition of the present disclosure is laminated with the other base material by melt extrusion; a method in which the other base material layer is laminated with the EVOH resin composition of the present disclosure by melt extrusion; a method in which the EVOH resin composition of the present disclosure and the other base material are coextruded; a method in which a film (layer) of the EVOH resin composition of the present disclosure and the other base material layer are separately formed and dry-laminated together with the use of a known adhesive agent such as of organic titanium compound, isocyanate compound, polyester compound or polyurethane compound; and a method in which a solution of the EVOH resin composition of the present disclosure is applied on the other base material layer, and a solvent is removed from the applied solution. Of these methods, the coextrusion method is preferred from the viewpoint of costs and environmental concerns.

The multilayer structure described above may be further subjected to a (heat) stretching process as required. The stretching process may be a uniaxial stretching process or a biaxial stretching process. The biaxial stretching process may be a simultaneous stretching process or a sequential stretching process. Exemplary methods for the stretching process include roll stretching method, tenter stretching method, tubular stretching method, stretch blowing method, and vacuum pressure forming method each having a higher stretch ratio. A temperature for the stretching is typically selected from a range of about 40°C to about 170°C, preferably about 60°C to about 160°C. If the stretching temperature is excessively low, the stretchability tends to be poorer. If the stretching temperature is excessively high, it will be difficult to ensure stable stretching.

The resulting multilayer structure may be further subjected to a heat-setting process to ensure dimensional stability after the stretching. The heat-setting process may be performed in a well-known manner. For example, the stretched multilayer structure (stretched film) is typically heat-treated at 80°C to 180°C, preferably 100°C to 165°C, for about 2 to about 600 seconds, while being kept tense.

Where the stretched multilayer film produced by using the EVOH resin composition of the present disclosure is used as a shrinkable film, the stretched film may be cold-set so as to be imparted with a heat-shrinkable property by applying cold air over the stretched film without performing the above heat-setting process.

Further, as required, a cup-shaped or tray-shaped multilayer container may be produced from the multilayer structure of the present disclosure. For the production of the multilayer container, a drawing process is typically employed. Specific examples of the drawing process include vacuum forming method, pressure forming method, vacuum pressure forming method, and plug-assisted vacuum pressure forming method. Where a tube-shaped or bottle-shaped multilayer container is produced from a multilayer parison (a hollow tubular preform to be blown), a blow molding process is employed. Specific examples of the blow molding process include extrusion blow molding method (twin head type, mold shift type, parison shift type, rotary type, accumulator type, horizontal parison type, and the like), cold parison blow molding method, injection blow molding method, and biaxial stretching blow molding method (extrusion type cold parison biaxial stretching blow molding method, injection type cold parison biaxial stretching blow molding method, injection inline type biaxial stretching blow molding method, and the like). As required, the multilayer structure of the present disclosure may be subjected to heating process, cooling process, rolling process, printing process, dry laminating process, solution or melt coating process, bag forming process, deep drawing process, box forming process, tube forming process, splitting process, or the like.

The thickness of the multilayer structure (or the stretched multilayer structure) of the present disclosure and the thicknesses of the EVOH resin composition layer, the polyamide layer, the adhesive resin layer, and the other thermoplastic resin layer of the multilayer structure may be properly set according to the layered configuration, the type of the thermoplastic resin, the type of the polyamide resin, the type of the adhesive resin, and the use purpose, the package shape, the required physical properties, and the like of the multilayer structure.

The overall thickness of the multilayer structure (or the stretched multilayer structure) of the present disclosure is typically 10 to 5,000 $\mu$m, preferably 30 to 3,000 $\mu$m, particularly preferably 50 to 2,000 $\mu$m. If the overall thickness of the multilayer structure is excessively small, the gas barrier property tends to be poorer. If the overall thickness of the multilayer structure is excessively great, the gas barrier property is excessive, and materials for the multilayer structure are unnecessarily required. This is not economically preferred. The thickness of the EVOH resin composition layer ($\alpha$) is typically 1 to 500 $\mu$m, preferably 3 to 300 $\mu$m, particularly preferably 5 to 200 $\mu$m. The thickness of the thermoplastic resin layer ($\delta$) is typically 5 to 3,000 $\mu$m, preferably 10 to 2,000 $\mu$m, particularly preferably 20 to 1,000 $\mu$m. The thickness of the adhesive resin layer ($\beta$) is typically 0.5 to 250 $\mu$m, preferably 1 to 150 $\mu$m, particularly preferably 3 to 100 $\mu$m. Where the EVOH resin composition layer ($\alpha$), the adhesive resin layer ($\beta$), and/or the thermoplastic resin layer ($\delta$) each include two or more layers, the above thickness values are each defined as the total thickness of the layers of the same type.

The thickness ratio between the EVOH resin composition layer ($\alpha$) and the other thermoplastic resin layer ($\delta$) of the multilayer structure (EVOH resin composition layer ($\alpha$)/other thermoplastic resin layer ($\delta$)) (if these layers each include a plurality of layers, the thickness ratio between the thickest one of the EVOH resin composition layers and the thickest one of the other thermoplastic resin layers) is typically 1/99 to 50/50, preferably 2/98 to 45/55, particularly preferably 5/95 to 40/60, especially preferably 10/90 to 35/65. Where the thickness ratio falls within the aforementioned range, the effect of the present disclosure tends to be remarkable. If the thickness ratio is smaller than the aforementioned range, the gas barrier property and the impact resistance tend to be insufficient. If the thickness ratio is greater than the aforementioned range, the multilayer structure is liable to be cracked.

The thickness ratio between the EVOH resin composition layer ($\alpha$) and the polyamide layer ($\gamma$) of the multilayer structure (EVOH resin composition layer ($\alpha$)/polyamide layer ($\gamma$)) (if these layers each include a plurality of layers, the thickness ratio between the thickest one of the EVOH resin composition layers and the thickest one of the polyamide layers) is typically 10/90 to 99/1, preferably 20/80 to 80/20, particularly preferably 40/60 to 60/40. Where the thickness ratio falls within the aforementioned range, the effect of the present disclosure tends to be remarkable. If the thickness ratio is smaller than the aforementioned range, the gas barrier property tends to be insufficient. If the thickness ratio is greater than the aforementioned range, the impact resistance tends to be insufficient.

The thickness ratio between the EVOH resin composition layer ($\alpha$) and the adhesive resin layer ($\beta$) of the multilayer structure (EVOH resin composition layer ($\alpha$)/adhesive resin layer ($\beta$)) (if these layers each include a plurality of layers, the thickness ratio between the thickest one of the EVOH resin composition layers and the thickest one of the adhesive resin layers) is typically 10/90 to 99/1, preferably 20/80 to 95/5, particularly preferably 50/50 to 90/10. Where the thickness ratio falls within the aforementioned range, the effect of the present disclosure tends to be remarkable. If the thickness ratio is smaller than the aforementioned range, the gas barrier property tends to be insufficient. If the thickness ratio is greater than the aforementioned range, the adhesive strength tends to be insufficient.

Bags, cups, trays, tubes, bottles, and other containers, and caps produced from the film or the stretched film formed in the aforementioned manner are useful for various packages (containers) for general foods, condiments such as mayonnaise and dressing, fermented foods such as miso, fat and oil such as salad oil, beverages, cosmetics, and pharmaceutical products.

EXAMPLES

The embodiments of the present disclosure will hereinafter be described more specifically by way of examples thereof. However, it should be understood that the present disclosure be not limited to the examples within the scope of the present disclosure.

[Example 1]

[Production of EVOH Resin Composition]

EVOH pellets containing an EVOH (a1) (ethylene-vinyl alcohol copolymer having an ethylene structural unit content of 29 mol %, a saponification degree of 99.7 mol %, and an MFR of 3.8 g/10 minutes (as measured at 210°C with a load of 2160 g)) as the EVOH (A) and sodium acetate (c1) as the acetic acid and/or its salt (C) were used. Pellets of nylon 6 (b1) (1022B available from Ube Corporation) was used as the polyamide resin (B), and stearic acid (d1) was used as the aliphatic carboxylic acid (D). Zinc stearate (e1) was used as the aliphatic carboxylic acid metal salt (E), and boric acid (f1) was used as the boric acid and/or its salt (F). EVOH (a1) was used in an amount of 90 wt.% based on the total amount of EVOH (a1), nylon 6 (b1), sodium acetate (c1), stearic acid (d1), and zinc stearate (e1), and nylon 6 (b1) was used in an amount of 10 wt.% based on the total amount of EVOH (a1), nylon 6 (b1), sodium acetate (c1), stearic acid (d1), and zinc stearate (e1). Sodium acetate (c1) was used in an amount of 389 ppm on an acetate ion basis based on the total amount of EVOH (a1), nylon 6 (b1), sodium acetate (c1), stearic acid (d1), and zinc stearate (e1). Stearic acid (d1) was used in an amount of 2.4 ppm on a carboxylate ion basis based on the total amount of EVOH (a1), nylon 6 (b1), sodium acetate (c1), stearic acid (d1), and zinc stearate (e1). Zinc stearate (e1) was used in an amount of 50 ppm on a metal ion basis based on the total amount of EVOH (a1), nylon 6 (b1), sodium acetate (c1), stearic acid (d1), and zinc stearate (e1). Boric acid (f1) was used in an amount of 54 ppm on a boron basis based the total amount of EVOH (a1), nylon 6 (b1), sodium acetate (c1), stearic acid (d1), zinc stearate (e1), and boric acid (f1).

The pellets of EVOH (a1) containing sodium acetate (c1), the pellets of nylon 6 (b1), stearic acid (d1), zinc stearate (e1), and boric acid (f1) were dry-blended together, and then the resulting mixture was melt-kneaded in a twin screw extruder having a diameter of 32 mm, an L/D ratio of 56, and a temperature setting of C2/C3/C4/C5/C6/C7/C8/C9/C10/C11/C12/C13/C14/C15/C16/D = 90/90/110/150/220/230/230/230/230/230/230/230/230/230/230/230°C. The resulting melt was extruded into a strand, which was in turn cut by a drum pelletizer. Thus, cylindrical pellets of a resin composition of the present disclosure (having a pellet diameter of 2 mm, a pellet length of 3.5 mm, and a volatile content of 0.2%) were prepared.

[Production of Multilayer Structure]

The EVOH resin composition produced in the aforementioned manner, a linear low-density polyethylene (LLDPE) (UF240 available from Japan Polyethylene Corporation, and having an MFR of 2.1 g/10 minutes (as measured at 190°C with a load of 2160 g)), and an adhesive resin (PLEXAR PX3236 available from LyondellBasell LLC., and having an MFR of 2.0 g/10 minutes (as measured at 190°C with a load of 2160 g)) were fed into a 3-type 5-layer multilayer coextrusion cast film forming apparatus, whereby a 3-type 5-layer multilayer structure (film) of LLDPE layer/adhesive resin layer/EVOH resin composition layer/adhesive resin layer/LLDPE layer was produced under the following conditions by a multilayer coextrusion method. The thicknesses ($\mu$m) of the respective layers of the multilayer structure were 37.5/5/15/5/37.5. The die temperatures of the forming apparatus were all set at 210°C.

(Conditions for Multilayer Coextrusion)

- Intermediate layer extruder (for EVOH resin composition): a 40-mm diameter single screw extruder (having a barrel temperature of 210°C)
- Upper and lower layer extruders (for LLDPE): 40-mm diameter single screw extruders (each having a barrel temperature of 210°C)
- Middle upper and lower layer extruders (for adhesive resin): 32-mm diameter single screw extruders (each having a barrel temperature of 210°C)
- Die: a 3-type 5-layer feed block T-die (having a die temperature of 210°C)
- Take-up speed: 9.0 m/minute
- Roll temperature: 80°C

The following elongational viscosity evaluation test was performed on the EVOH resin composition produced in the aforementioned manner. Further, the multilayer structure produced in the aforementioned manner was evaluated for impact resistance after hot water treatment, hot water insolubility, adhesive strength, gas barrier property, and flow stability in the following manner.

<Evaluation of EVOH Resin Composition for Elongational Viscosity (Pa•S)>

The EVOH resin composition produced in the aforementioned manner was evaluated by measuring the elongational viscosity (Pa•s) of the EVOH resin composition at 210°C at 100 $S^{-1}$ under the following conditions with the use of a capillary rheometer based on the Cogswell's equations (Polymer Engineering Science, Vol. 12, pp. 64-73 (1972)).

(Cogswell's Equations)

$$\eta_e = [9(n + 1)^2 P_0^2]/[32\eta_s(d\gamma/dt)^2] \ldots\ldots(4)$$

$$d\varepsilon/dt = 4\sigma_s(d\gamma/dt)/[3(n + 1)P_0] \ldots\ldots(5)$$

$$\sigma_s = k(d\gamma/dt)^n \ldots\ldots(6)$$

$\eta_e$: Elongational viscosity (Pa•s)
$\eta_s$: Shear viscosity (Pa•s)
$d\gamma/dt$: Shear strain rate (s$^{-1}$)
$d\varepsilon/dt$: Elongational strain rate (s$^{-1}$)
$\sigma_s$: Shear stress (Pa)
k, n: Constants
$P_0$: Pressure loss (Pa)

(Conditions for Measurement of Elongational Viscosity)

Measurement device: REOGRAPH 20 available from Gottfert Inc.
Measurement temperature: 210°C
Preheating period: 10 minutes
Long die: Having a length of 10 mm, a diameter of 1 mm, and an inflow angle of 180 degrees
Short die: Having a length of 0.2 mm, a diameter of 1 mm, and an inflow angle of 180 degrees

<Impact Resistance after Hot Water Treatment>

A sample piece (10 cm × 10 cm) of the multilayer structure produced in the aforementioned manner was subjected to a hot water treatment at 120°C for 30 minutes with the use of a hot water immersion type retort device (Hisaka Works, Ltd.) and then allowed to stand still in an atmosphere at 23°C at 50% RH for 7 days. Thus, an evaluation sample was prepared.

The impact strength (kgf•cm) of the evaluation sample thus prepared was measured in an atmosphere at 23°C at 50% RH by means of a YSS type film impact tester (MODEL 181 available from Yasuda Seiki Seisakusho, Ltd.) The measurement was performed ten times, and the impact strength values thus measured were averaged. Based on the average, the multilayer structure was evaluated for the impact strength after the hot water treatment. The film impact tester had a clamp inner diameter of 60 mm, an impact ball radius of 12.7 mm, and a pendulum lift angle of 90 degrees. A higher impact strength value means that the impact strength of the multilayer structure after the hot water treatment is more excellent, while a lower impact strength value means that the impact strength of the multilayer structure after the hot water treatment is poorer.

<Hot Water Insolubility>

A sample piece (10 cm × 10 cm) of the multilayer structure produced in the aforementioned manner was subjected to a hot water treatment at 120°C for 30 minutes with the use of a hot water immersion type retort device (Hisaka Works, Ltd.) Thus, an evaluation sample was prepared.

The EVOH resin composition was evaluated for the hot water insolubility based on the following evaluation criteria by visually checking whether the resin was bled out from the edges of the evaluation sample prepared in the aforementioned manner. A smaller resin bleed-out degree means that the EVOH resin composition is more excellent in hot water insolubility, while a greater resin bleed-out degree means that the EVOH resin composition is poorer in hot water insolubility.

A: The bleed-out of the resin from the sheet edges was not visually observed.
B: The bleed-out of the resin from the sheet edges was slightly visually observed.
C: The bleed-out of the resin from the sheet edges was obviously visually observed.

<Adhesive Strength of Multilayer Structure>

The adhesive strength (N/15 mm) between the EVOH resin composition layer and the adhesive resin layer of the multilayer structure produced in the aforementioned manner was measured by the following T-peel test. The measurement was performed ten times, and adhesive strength values thus measured were averaged. The multilayer structure was evaluated for the adhesive strength based on the average. A higher adhesive strength value means that the multilayer structure was more excellent in adhesive strength, while a lower adhesive strength value means that the multilayer structure was poorer in adhesive strength.

(Conditions for T-Peel Test)

Device: Autograph AGS-H (available from Shimadzu Corporation)
Load Cell: 500N
Test method: T-peel method (A test strip was held in a T-shape for peeling thereof)
Size of test strip: Having a width of 15 mm
Test speed: 300 mm/minute

<Gas Barrier Property of Multilayer Structure>

The multilayer structure produced in the aforementioned manner was evaluated for gas barrier property at 20°C at 65% RH by means of an oxygen gas transmission rate measuring device (OX-TRAN 2/21 available from MOCON Inc.)

<Evaluation of EVOH Resin Composition for Flow Stability>

The EVOH resin composition produced in the aforementioned manner was evaluated for flow stability based on the following criteria by visually observing the appearance of the multilayer structure. A higher flow stability of the EVOH resin composition means that the EVOH resin composition layer has an even thickness in the multilayer structure and, therefore, the multilayer structure is more excellent in appearance. On the other hand, a lower flow stability of the EVOH resin composition means that the EVOH resin composition layer has an uneven thickness in the multilayer structure and, therefore, the multilayer structure is poorer in appearance.

A: The multilayer structure was entirely substantially free from streaking, fogging, and fisheyes, and was excellent in appearance.
B: The multilayer structure partially suffered from slight streaking, fogging, and fisheyes.
C: The multilayer structure entirely suffered from noticeable streaking, fogging, and fisheyes.
D: The multilayer structure entirely suffered from remarkable streaking, fogging, and fisheyes.

[Example 2]

An EVOH resin composition and a multilayer structure were produced in substantially the same manner as in Example 1, except that stearic acid (d1) was used in an amount of 0.7 ppm on a carboxylate ion basis based on the total amount of EVOH (a1), nylon 6 (b1), sodium acetate (c1), stearic acid (d1), and zinc stearate (e1). The EVOH resin composition and the multilayer structure thus produced were evaluated in the same manner as in Example 1.

[Example 3]

An EVOH resin composition and a multilayer structure were produced in substantially the same manner as in Example 1, except that stearic acid (d1) was used in an amount of 4.9 ppm on a carboxylate ion basis based on the total amount of EVOH (a1), nylon 6 (b1), sodium acetate (c1), stearic acid (d1), and zinc stearate (e1), and that zinc stearate (e1) was used in an amount of 100 ppm on a metal ion basis based on the total amount of EVOH (a1), nylon 6 (b1), sodium acetate (c1), stearic acid (d1), and zinc stearate (e1). The EVOH resin composition and the multilayer structure thus produced were evaluated in the same manner as in Example 1.

[Example 4]

An EVOH resin composition and a multilayer structure were produced in substantially the same manner as in Example 1, except that stearic acid (d1) was used in an amount of 9.7 ppm on a carboxylate ion basis based on the total amount of EVOH (a1), nylon 6 (b1), sodium acetate (c1), stearic acid (d1), and zinc stearate (e1), and that zinc stearate (e1) was used in an amount of 200 ppm on a metal ion basis based on the total amount of EVOH (a1), nylon 6 (b1), sodium acetate (c1), stearic acid (d1), and zinc stearate (e1). The EVOH resin composition and the multilayer structure thus produced were evaluated in the same manner as in Example 1.

[Example 5]

An EVOH resin composition and a multilayer structure were produced in substantially the same manner as in Example 1, except that caprylic acid (d2) was used instead of stearic acid (d1) in an amount of 6.9 ppm on a carboxylate ion basis based on the total amount of EVOH (a1), nylon 6 (b1), sodium acetate (c1), caprylic acid (d2), and zinc caprylate (e2), and that zinc caprylate (e2) was used instead of zinc stearate (e1) in an amount of 50 ppm on a metal ion basis based on the total amount of EVOH (a1), nylon 6 (b1), sodium acetate (c1), caprylic acid (d2), and zinc caprylate (e2).

The EVOH resin composition and the multilayer structure thus produced were evaluated in the same manner as in Example 1.

[Example 6]

An EVOH resin composition and a multilayer structure were produced in substantially the same manner as in Example 5, except that boric acid (f1) was used in an amount of 300 ppm on a boron basis based on the total amount of EVOH (a1), nylon 6 (b1), sodium acetate (c1), caprylic acid (d2), zinc caprylate (e2), and boric acid (f1). The EVOH resin composition and the multilayer structure thus produced were evaluated in the same manner as in Example 1.

[Example 7]

An EVOH resin composition and a multilayer structure were produced in substantially the same manner as in Example 5, except that caprylic acid (d2) was used in an amount of 13.8 ppm on a carboxylate ion basis based on the total amount of EVOH (a1), nylon 6 (b1), sodium acetate (c1), caprylic acid (d2), and zinc caprylate (e2), and that zinc caprylate (e2) was used in an amount of 100 ppm on a metal ion basis based on the total amount of EVOH (a1), nylon 6 (b1), sodium acetate (c1), caprylic acid (d2), and zinc caprylate (e2). The EVOH resin composition and the multilayer structure thus produced were evaluated in the same manner as in Example 1.

[Example 8]

An EVOH resin composition and a multilayer structure were produced in substantially the same manner as in Example 7, except that sodium acetate (c1) was used in an amount of 100 ppm on a carboxylate ion basis based on the total amount of EVOH (a1), nylon 6 (b1), sodium acetate (c1), caprylic acid (d2), and zinc caprylate (e2), and that boric acid (f1) was used in an amount of 6 ppm on a boron basis based on the total amount of EVOH (a1), nylon 6 (b1), sodium acetate (c1), caprylic acid (d2), zinc caprylate (e2), and boric acid (f1). The EVOH resin composition and the multilayer structure thus produced were evaluated in the same manner as in Example 1.

[Example 9]

An EVOH resin composition and a multilayer structure were produced in substantially the same manner as in Example 5, except that caprylic acid (d2) was used in an amount of 27.6 ppm on a carboxylate ion basis based on the total amount of EVOH (a1), nylon 6 (b1), sodium acetate (c1), caprylic acid (d2), and zinc caprylate (e2), and that zinc caprylate (e2) was used in an amount of 200 ppm on a metal ion basis based on the total amount of EVOH (a1), nylon 6 (b1), sodium acetate (c1), caprylic acid (d2), and zinc caprylate (e2). The EVOH resin composition and the multilayer structure thus produced were evaluated in the same manner as in Example 1.

[Example 10]

An EVOH resin composition and a multilayer structure were produced in substantially the same manner as in Example 1, except that lauric acid (d3) was used instead of stearic acid (d1) in an amount of 1.8 ppm on a carboxylate ion basis based on the total amount of EVOH (a1), nylon 6 (b1), sodium acetate (c1), lauric acid (d3), and zinc laurate (e3), and that zinc laurate (e3) was used instead of zinc stearate (e1) in an amount of 50 ppm on a metal ion basis based on the total amount of EVOH (a1), nylon 6 (b1), sodium acetate (c1), lauric acid (d3), and zinc laurate (e3). The EVOH resin composition and the multilayer structure thus produced were evaluated in the same manner as in Example 1.

[Example 11]

An EVOH resin composition and a multilayer structure were produced in substantially the same manner as in Example 10, except that lauric acid (d3) was used in an amount of 3.6 ppm on a carboxylate ion basis based on the total amount of EVOH (a1), nylon 6 (b1), sodium acetate (c1), lauric acid (d3), and zinc laurate (e3), and that zinc laurate (e3) was used in an amount of 100 ppm on a metal ion basis based on the total amount of EVOH (a1), nylon 6 (b1), sodium acetate (c1), lauric acid (d3), and zinc laurate (e3). The EVOH resin composition and the multilayer structure thus produced were evaluated in the same manner as in Example 1.

[Example 12]

An EVOH resin composition and a multilayer structure were produced in substantially the same manner as in Example 10, except that lauric acid (d3) was used in an amount of 7.1 ppm on a carboxylate ion basis based on the total amount of EVOH (a1), nylon 6 (b1), sodium acetate (c1), lauric acid (d3), and zinc laurate (e3), and that zinc laurate (e3) was used in an amount of 200 ppm on a metal ion basis based on the total amount of EVOH (a1), nylon 6 (b1), sodium acetate (c1), lauric acid (d3), and zinc laurate (e3). The EVOH resin composition and the multilayer structure thus produced were evaluated in the same manner as in Example 1.

[Example 13]

An EVOH resin composition and a multilayer structure were produced in substantially the same manner as in Example 1, except that behenic acid (d4) was used instead of stearic acid (d1) in an amount of 2.9 ppm on a carboxylate ion basis based on the total amount of EVOH (a1), nylon 6 (b1), sodium acetate (c1), behenic acid (d4), and zinc behenate (e4), and that zinc behenate (e4) was used instead of zinc stearate (e1) in an amount of 50 ppm on a metal ion basis based on the total amount of EVOH (a1), nylon 6 (b1), sodium acetate (c1), behenic acid (d4), and zinc behenate (e4). The EVOH resin composition and the multilayer structure thus produced were evaluated in the same manner as in Example 1.

[Comparative Example 1]

An EVOH resin composition and a multilayer structure were produced in substantially the same manner as in Example 5, except that sodium acetate (c1) was used in an amount of 432 ppm on an acetate ion basis based on the total amount of EVOH (a1), sodium acetate (c1), caprylic acid (d2), and zinc caprylate (e2) without the use of nylon 6 (b1), and that boric acid (f1) was used in an amount of 59 ppm on a born basis based on the total amount of EVOH (a1), sodium acetate (c1), caprylic acid (d2), zinc caprylate (e2), and boric acid (f1). The EVOH resin composition and the multilayer structure thus produced were evaluated in the same manner as in Example 1.

[Comparative Example 2]

An EVOH resin composition and a multilayer structure were produced in substantially the same manner as in Example 5, except that EVOH (a1) was used in an amount of 10 wt.% based on the total amount of EVOH (a1), nylon 6 (b1), sodium acetate (c1), caprylic acid (d2), and zinc caprylate (e2), and that nylon 6 (b1) was used in an amount of 90 wt.% based on the total amount of EVOH (a1), nylon 6 (b1), sodium acetate (c1), caprylic acid (d2), and zinc caprylate (e2). The EVOH resin composition and the multilayer structure thus produced were evaluated in the same manner as in Example 1.

[Comparative Example 3]

An EVOH resin composition and a multilayer structure were produced in substantially the same manner as in Example 1 without the use of stearic acid (d1) and zinc stearate (e1). The EVOH resin composition and the multilayer structure thus produced were evaluated in the same manner as in Example 1.

[Comparative Example 4]

An EVOH resin composition and a multilayer structure were produced in substantially the same manner as in Example 5, except that EVOH (a2) (ethylene-vinyl alcohol copolymer having an ethylene structural unit content of 29 mol %, a saponification degree of 99.7 mol %, and an MFR of 8.0 g/10 minutes (at 210°C with a load of 2160 g)) was used instead of EVOH (a1) without the use of sodium acetate (c1) and boric acid (f1). The EVOH resin composition and the multilayer structure thus produced were evaluated in the same manner as in Example 1.

[Comparative Example 5]

An EVOH resin composition and a multilayer structure were produced in substantially the same manner as in Example 5, except that caprylic acid (d2) was used in an amount of 82.8 ppm on a carboxylate ion basis based on the total amount of EVOH (a1), nylon 6 (b1), sodium acetate (c1), caprylic acid (d2), and zinc caprylate (e2), and that zinc caprylate (e2) was used in an amount of 600 ppm on a metal ion basis based on the total amount of EVOH (a1), nylon 6 (b1), sodium acetate (c1), caprylic acid (d2), and zinc caprylate (e2). The EVOH resin composition and the multilayer structure thus produced were evaluated in the same manner as in Example 1.

[Comparative Example 6]

An EVOH resin composition and a multilayer structure were produced in substantially the same manner as in Example 10, except that lauric acid (d3) was used in an amount of 21.4 ppm on a carboxylate ion basis based on the total amount of EVOH (a1), nylon 6 (b1), sodium acetate (c1), lauric acid (d3), and zinc laurate (e3), and that zinc laurate (e3) was used in an amount of 600 ppm on a metal ion basis based on the total amount of EVOH (a1), nylon 6 (b1), sodium acetate (c1), lauric acid (d3), and zinc laurate (e3). The EVOH resin composition and the multilayer structure thus produced were evaluated in the same manner as in Example 1.

[Comparative Example 7]

An EVOH resin composition and a multilayer structure were produced in substantially the same manner as in Example 1, except that stearic acid (d1) was used in an amount of 29.2 ppm on a carboxylate ion basis based on the total amount of EVOH (a1), nylon 6 (b1), sodium acetate (c1), stearic acid (d1), and zinc stearate (e1), and that zinc stearate (e1) was used in an amount of 600 ppm on a metal ion basis based on the total amount of EVOH (a1), nylon 6 (b1), sodium acetate (c1), stearic acid (d1), and zinc stearate (e1). The EVOH resin composition and the multilayer structure thus produced were evaluated in the same manner as in Example 1.

[Comparative Example 8]

An EVOH resin composition and a multilayer structure were produced in substantially the same manner as in Example 1, except that stearic acid (d1) was used in an amount of 1.9 ppm on a carboxylate ion basis based on the total amount of EVOH (a1), nylon 6 (b1), sodium acetate (c1), stearic acid (d1), and calcium stearate, and that calcium stearate was used instead of zinc stearate (e1) in an amount of 50 ppm on a metal ion basis based on the total amount of EVOH (a1), nylon 6 (b1), sodium acetate (c1), stearic acid (d1), and calcium stearate. The EVOH resin composition and the multilayer structure thus produced were evaluated in the same manner as in Example 1.

[Comparative Example 9]

An EVOH resin composition and a multilayer structure were produced in substantially the same manner as in Example 1, except that stearic acid (d1) was used in an amount of 15.4 ppm on a carboxylate ion basis based on the total amount of EVOH (a1), nylon 6 (b1), sodium acetate (c1), stearic acid (d1), and magnesium stearate, and that magnesium stearate was used instead of zinc stearate (e1) in an amount of 50 ppm on a metal ion basis based on the total amount of EVOH (a1), nylon 6 (b1), sodium acetate (c1), stearic acid (d1), and magnesium stearate. The EVOH resin composition and the multilayer structure thus produced were evaluated in the same manner as in Example 1.

[Comparative Example 10]

An EVOH resin composition and a multilayer structure were produced in substantially the same manner as in Example 1, except that stearic acid (d1) was used in an amount of 3.3 ppm on a carboxylate ion basis based on the total amount of EVOH (a1), nylon 6 (b1), sodium acetate (c1), stearic acid (d1), and sodium stearate, and that sodium stearate was used instead of zinc stearate (e1) in an amount of 50 ppm on a metal ion basis based on the total amount of EVOH (a1), nylon 6 (b1), sodium acetate (c1), stearic acid (d1), and sodium stearate. The EVOH resin composition and the multilayer structure thus produced were evaluated in the same manner as in Example 1.

[Comparative Example 11]

An EVOH resin composition and a multilayer structure were produced in substantially the same manner as in Example 1, except that stearic acid (d1) was used in an amount of 483.6 ppm on a carboxylate ion basis based on the total amount of EVOH (a1), nylon 6 (b1), sodium acetate (c1), stearic acid (d1), and zinc stearate (e1). The EVOH resin composition and the multilayer structure thus produced were evaluated in the same manner as in Example 1.

[Comparative Example 12]

An EVOH resin composition and a multilayer structure were produced in substantially the same manner as in Example 1, except that stearic acid (d1) was used in an amount of 0.4 ppm on a carboxylate ion basis based on the total amount of EVOH (a1), nylon 6 (b1), sodium acetate (c1), stearic acid (d1), and zinc stearate (e1). The EVOH resin composition and the multilayer structure thus produced were evaluated in the same manner as in Example 1.

[Comparative Example 13]

An EVOH resin composition and a multilayer structure were produced in substantially the same manner as in Example 1, except that zinc gluconate trihydrate was used instead of zinc stearate (e1) in an amount of 50 ppm on a metal ion basis based on the total amount of EVOH (a1), nylon 6 (b1), sodium acetate (c1), stearic acid (d1), and zinc gluconate trihydrate. The EVOH resin composition and the multilayer structure thus produced were evaluated in the same manner as in Example 1.

[Comparative Example 14]

An EVOH resin composition and a multilayer structure were produced in substantially the same manner as in Example 1, except that zinc citrate dihydrate was used instead of zinc stearate (e1) in an amount of 50 ppm on a metal ion basis based on the total amount of EVOH (a1), nylon 6 (b1), sodium acetate (c1), stearic acid (d1), and zinc citrate dihydrate. The EVOH resin composition and the multilayer structure thus produced were evaluated in the same manner as in Example 1.

[Comparative Example 15]

An EVOH resin composition and a multilayer structure were produced in substantially the same manner as in Example 5, except that boric acid (f1) was used in an amount of 525 ppm on a boron basis based on the total amount of EVOH (a1), nylon 6 (b1), sodium acetate (c1), caprylic acid (d2), zinc caprylate (e2), and boric acid (f1). The EVOH resin composition and the multilayer structure thus produced were evaluated in the same manner as in Example 1.

[Comparative Example 16]

An EVOH resin composition and a multilayer structure were produced in substantially the same manner as in Example 5, except that EVOH (a3) (ethylene-vinyl alcohol copolymer having an ethylene structural unit content of 38 mol %, a saponification degree of 99.7 mol %, and an MFR of 24.4 g/10 minutes (at 210°C with a load of 2160 g)) was used instead of EVOH (a1), and that sodium acetate (c1) was used in an amount of 518 ppm on an acetate ion basis based on the total amount of EVOH (a3), nylon 6 (b1), sodium acetate (c1), caprylic acid (d2), and zinc caprylate (e2) without the use of boric acid (f1). The EVOH resin composition and the multilayer structure thus produced were evaluated in the same manner as in Example 1.

The evaluation results for Examples and Comparative Examples are shown in Table 1 and Table 2.

Table 1

| | Example 1 | Example 2 | Example 3 | Example 4 | Example 5 | Example 6 | Example 7 |
|---|---|---|---|---|---|---|---|
| EVOH (A) (wt.%) | 90 | 90 | 90 | 90 | 90 | 90 | 90 |
| Polyamide resin (B) (wt.%) | 10 | 10 | 10 | 10 | 10 | 10 | 10 |
| Acetic acid and/or acetic acid salt (C) (ppm) (on acetate ion basis) | 389 | 389 | 389 | 389 | 389 | 389 | 389 |
| Aliphatic carboxylic acid (D) | Stearic acid | Stearic acid | Stearic acid | Stearic acid | Caprylic acid | Caprylic acid | Caprylic acid |
| Amount of (D) (ppm) (on carboxylate ion basis) | 2.4 | 0.7 | 4.9 | 9.7 | 6.9 | 6.9 | 13.8 |
| Aliphatic carboxylic acid metal salt (E) | Zinc stearate | Zinc stearate | Zinc stearate | Zinc stearate | Zinc caprylate | Zinc caprylate | Zinc caprylate |
| Amount of (E) (ppm) (on metal ion basis) | 50 | 50 | 100 | 200 | 50 | 50 | 100 |
| Boric acid (F) (ppm) (on boron basis) | 54 | 54 | 54 | 54 | 54 | 300 | 54 |
| (E)/(C) | 0.13 | 0.13 | 0.26 | 0.51 | 0.13 | 0.13 | 0.26 |
| (E)/(D) | 20.58 | 71.43 | 20.58 | 20.58 | 7.25 | 7.25 | 7.25 |
| (C)/(D) | 159.94 | 555.24 | 79.97 | 39.99 | 56.34 | 56.39 | 28.17 |
| (E)/(F) | 0.93 | 0.93 | 1.85 | 3.70 | 0.93 | 0.17 | 1.85 |
| Elongational viscosity (Pa·s) (at 230°C at 100 S$^{-1}$) | 4053 | 4053 | 4053 | 4053 | 4053 | 22586 | 4053 |
| Impact strength (kgf·cm) after hot water treatment (at 120°C for 30 minutes) | 16.21 | 15.13 | 16.97 | 17.1 | 16.58 | 15 | 17.36 |
| Hot water insolubility (at 120°C for 30 minutes) | A | A | A | A | A | A | A |
| Adhesive strength (N/15 mm) | 7.08 | 6.91 | 7.03 | 6.87 | 7.09 | 7.06 | 7.07 |
| Flow stability | A | A | A | A | A | B | A |
| Gas barrier property (cc·20 μm/m²·day·atm) | 0.5 | 0.5 | 0.5 | 0.5 | 0.5 | 0.5 | 0.5 |

Table 1 (continues)

| | Example 8 | Example 9 | Example 10 | Example 11 | Example 12 | Example 13 |
|---|---|---|---|---|---|---|
| EVOH (A) (wt.%) | 90 | 90 | 90 | 90 | 90 | 90 |
| Polyamide resin (B) (wt.%) | 10 | 10 | 10 | 10 | 10 | 10 |
| Acetic acid and/or acetic acid salt (C) (ppm) (on acetate ion basis) | 100 | 389 | 389 | 389 | 389 | 389 |
| Aliphatic carboxylic acid (D) | Caprylic acid | Caprylic acid | Lauric acid | Lauric acid | Lauric acid | Behenic acid |
| Amount of (D) (ppm) (on carboxylate ion basis) | 13.8 | 27.6 | 1.8 | 3.6 | 7.1 | 2.9 |
| Aliphatic carboxylic acid metal salt (E) | Zinc caprylate | Zinc caprylate | Zinc laurate | Zinc laurate | Zinc laurate | Zinc behenate |
| Amount of (E) (ppm) (on metal ion basis) | 100 | 200 | 50 | 100 | 200 | 50 |
| Boric acid (F) (ppm) (on boron basis) | 6 | 54 | 54 | 54 | 54 | 54 |
| (E)/(C) | 1 | 0.51 | 0.13 | 0.26 | 0.51 | 0.13 |
| (E)/(D) | 7.25 | 7.25 | 28.04 | 28.04 | 28.04 | 17.47 |
| (C)/(D) | 7.25 | 14.09 | 217.97 | 108.98 | 54.49 | 135.84 |
| (E)/(F) | 16.67 | 3.70 | 0.93 | 1.85 | 3.70 | 0.93 |
| Elongational viscosity (Pa·s) (at 230°C at 100 S$^{-1}$) | 2289 | 4053 | 4053 | 4053 | 4053 | 4053 |
| Impact strength (kgf·cm) after hot water treatment (at 120°C for 30 minutes) | 17.25 | 17.49 | 16.5 | 17.27 | 17.4 | 16.16 |
| Hot water insolubility (at 120°C for 30 minutes) | A | A | A | A | A | A |
| Adhesive strength (N/15 mm) | 7.12 | 7.01 | 7.09 | 7.06 | 6.96 | 7.01 |
| Flow stability | A | A | A | A | A | A |
| Gas barrier property (cc·20 μm/m$^2$·day·atm) | 0.5 | 0.5 | 0.5 | 0.5 | 0.5 | 0.5 |

## Table 2

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| EVOH (A) (wt.%) | 100 | 10 | 90 | 90 (a2) | 90 | 90 | 90 | 90 |
| Polyamide resin (B) (wt.%) | - | 90 | 10 | 10 | 10 | 10 | 10 | 10 |
| Acetic acid and/or acetic acid salt (C) (ppm) (on acetate ion basis) | 432 | 43 | 389 | 0 | 389 | 389 | 389 | 389 |
| Aliphatic carboxylic acid (D) | Caprylic acid | Caprylic acid | - | Caprylic acid | Caprylic acid | Lauric acid | Stearic acid | Stearic acid |
| Amount of (D) (ppm) (on carboxylate ion basis) | 6.9 | 6.9 | 0 | 6.9 | 82.8 | 21.4 | 29.2 | 1.9 |
| Aliphatic carboxylic acid metal salt (E) | Zinc caprylate | Zinc caprylate | - | Zinc caprylate | Zinc caprylate | Zinc laurate | Zinc stearate | Ca stearate |
| Amount of (E) (ppm) (on metal ion basis) | 50 | 50 | 0 | 50 | 600 | 600 | 600 | 50 |
| Boric acid (F) (ppm) (on boron basis) | 59 | 5.94 | 54 | 0 | 54 | 54 | 54 | 54 |
| (E)/(C) | 0.12 | 1.16 | 0 | ∞ | 1.54 | 1.54 | 1.54 | 0.13 |
| (E)/(D) | 7.25 | 7.25 | 0 | 7.25 | 7.25 | 28.04 | 20.58 | 26.34 |
| (C)/(D) | 62.6 | 6.26 | ∞ | 0 | 4.7 | 18.16 | 13.33 | 204.78 |
| (E)/(F) | 0.85 | 8.42 | 0 | ∞ | 11.11 | 11.11 | 11.11 | 0.93 |
| Elongational viscosity (Pa·s) (at 230°C at 100 S⁻¹) | 4640 | 4020 | 4053 | 1928 | 4053 | 4053 | 4053 | 4053 |
| Impact strength (kgf·cm) after hot water treatment (at 120°C for 30 minutes) | 17.14 | 16.21 | 13.92 | 16.49 | 17.59 | 17.5 | 17.19 | 14.07 |
| Hot water insolubility (at 120°C for 30 minutes) | C | A | A | A | A | A | A | A |
| Adhesive strength (N/15 mm) | 7.14 | 6.74 | 7.1 | 2.67 | 4.73 | 3.17 | 2.99 | 7.08 |
| Flow stability | A | A | D | A | C | C | C | A |
| Gas barrier property (cc·20 μm/m²·day·atm) | 0.2 | 55 | 0.5 | 0.5 | 0.5 | 0.5 | 0.5 | 0.5 |

Table 2 (continued)

| | Comparative Example 9 | Comparative Example 10 | Comparative Example 11 | Comparative Example 12 | Comparative Example 13 | Comparative Example 14 | Comparative Example 15 | Comparative Example 16 |
|---|---|---|---|---|---|---|---|---|
| EVOH (A) (wt.%) | 90 | 90 | 90 | 90 | 90 | 90 | 90 | 90 (a3) |
| Polyamide resin (B) (wt.%) | 10 | 10 | 10 | 10 | 10 | 10 | 10 | 10 |
| Acetic acid and/or acetic acid salt (C) (ppm) (on acetate ion basis) | 389 | 389 | 389 | 389 | 389 | 389 | 389 | 518 |
| Aliphatic carboxylic acid (D) | Stearic acid | Stearic acid | Stearic acid | Stearic acid | Stearic acid | Stearic acid | Caprylic acid | Caprylic acid |
| Amount of (D) (ppm) (on carboxylate ion basis) | 15.4 | 3.3 | 483.6 | 0.4 | 2.4 | 2.4 | 6.9 | 6.9 |
| Aliphatic carboxylic acid metal salt (E) | Mg stearate | Na stearate | Zinc stearate | Zinc stearate | Zinc gluconate trihydrate | Zinc citrate dihydrate | Zinc caprylate | Zinc caprylate |
| Amount of (E) (ppm) (on metal ion basis) | 50 | 50 | 50 | 50 | 50 | 50 | 50 | 50 |
| Boric acid (F) (ppm) (on boron basis) | 54 | 54 | 54 | 54 | 54 | 54 | 525 | 0 |
| (E)/(C) | 0.13 | 0.13 | 0.13 | 0.13 | 0.13 | 0.13 | 0.13 | 0.1 |
| (E)/(D) | 3.25 | 14.93 | 0.1 | 125 | 20.58 | 20.58 | 7.25 | 7.25 |
| (C)/(D) | 25.24 | 116.04 | 0.8 | 971.67 | 159.94 | 159.94 | 56.34 | 75.12 |
| (E)/(F) | 0.93 | 0.93 | 0.93 | 0.93 | 0.93 | 0.93 | 0.10 | ∞ |
| Elongational viscosity (Pa·s) (at 230°C at 100 S$^{-1}$) | 4053 | 4053 | 4053 | 4053 | 4053 | 4053 | 47090 | 304 |
| Impact strength (kgf·cm) after hot water treatment (at 120°C for 30 minutes) | 13.76 | 14.26 | 14.55 | 14.02 | 12.19 | 10.95 | 5.86 | 13.15 |
| Hot water insolubility (at 120°C for 30 minutes) | A | A | A | A | A | A | A | B |
| Adhesive strength (N/15 mm) | 7.08 | 7.28 | 7.08 | 6.73 | 5.2 | 5.4 | 7.13 | 7.13 |
| Flow stability | C | A | A | A | D | D | D | D |
| Gas barrier property (cc·20 µm/m²·day·atm) | 0.5 | 0.5 | 0.5 | 0.5 | 0.5 | 0.5 | 0.5 | 0.5 |

In Comparative Example 3 in which the aliphatic carboxylic acid metal salt (E) was not contained, the impact strength after the hot water treatment was poorer. In Comparative Example 4 in which the aliphatic carboxylic acid metal salt (E) was contained but the acetic acid and/or its salt (C) was not contained, the impact strength after the hot water treatment was excellent, but the adhesive strength was poorer.

In Comparative Examples 5 to 7 in which the expression (1) specified in the present disclosure was not satisfied, the adhesive strength was lower, and the flow stability was poorer. In Comparative Examples 11 and 12 in which the expression (2) specified in the present disclosure was not satisfied, the impact strength after the hot water treatment was lower. In Comparative Example 1 in which the polyamide resin (B) was not contained, the gas barrier property, and the impact strength after the hot water treatment were excellent, but the hot water insolubility was poorer. In Comparative Example 2 in which the polyamide resin (B) was present in a greater amount, on the other hand, the impact strength and the hot water insolubility after the hot water treatment were excellent, but the gas barrier property was poorer.

In Comparative Examples 7 to 9 in which the metal moiety of the aliphatic carboxylic acid metal salt (E) was not at least one selected from the elements belonging to the Long Periodic Table 4th-period d-block, the impact strength after the hot water treatment was lower. In Comparative Example 8, the flow stability was still poorer.

In Comparative Examples 13 and 14 in which the aliphatic carboxylic acid (D) and the aliphatic carboxylic acid metal salt (E) did not have the same anionic moiety, the impact strength and the adhesive strength after the hot water treatment were lower, and the flow stability was poorer.

In Comparative Examples 15 and 16 in which the elongational viscosity at 210°C at 100 $S^{-1}$ did not satisfy the expression (3) specified in the present disclosure, the adhesive strength was proper, but the impact strength after the hot water treatment and the flow stability were lower. In Comparative Example 16, the hot water insolubility was still poorer.

In contrast, the EVOH resin compositions (Examples 1 to 13) having the characteristic features of the present disclosure were excellent in impact strength and hot water insolubility after the hot water treatment, and were still excellent in adhesive strength and flow stability.

Packages were produced by using the respective multilayer structures of Examples produced in the aforementioned manner. The packages thus produced were excellent in impact resistance and hot water insolubility after the hot water treatment, and were excellent in flow stability and adhesive strength. In addition, the packages were excellent in gas barrier property.

While specific forms of the embodiments of the present disclosure have been shown in the aforementioned examples, the examples are merely illustrative but not limitative. It is contemplated that various modifications apparent to those skilled in the art could be made within the scope of the disclosure.

The EVOH resin composition of the present disclosure is excellent in impact resistance and hot water insolubility after the hot water treatment, and in flow stability and adhesive strength, while maintaining excellent gas barrier properties. Therefore, the multilayer structure including the layer formed from the EVOH resin composition is useful as a material for various packages (containers) for general foods, condiments such as mayonnaise and dressing, fermented foods such as miso, fat and oil such as salad oil, beverages, cosmetics, and pharmaceutical products.

**Claims**

1. An ethylene-vinyl alcohol copolymer resin composition comprising:

   (A) an ethylene-vinyl alcohol copolymer;
   (B) a polyamide resin;
   (C) acetic acid and/or its salt;
   (D) an aliphatic carboxylic acid other than acetic acid; and
   (E) an aliphatic carboxylic acid metal salt which is a metal salt of the aliphatic carboxylic acid (D);

      wherein a metal moiety of the aliphatic carboxylic acid metal salt (E) is at least one selected from elements belonging to the Long Periodic Table 4th-period d-block;
      wherein the ethylene-vinyl alcohol copolymer (A) and the polyamide resin (B) are present in a weight ratio of ethylene-vinyl alcohol copolymer (A)/polyamide resin (B) = 99/1 to 15/85;
      wherein the acetic acid and/or its salt (C), the aliphatic carboxylic acid (D), and the aliphatic carboxylic acid metal salt (E) are present in amounts, on a weight basis, satisfying the following expressions (1) and (2):

$$0.001 \le (\text{Amount of (E) on metal ion basis})/(\text{Amount of (C) on acetate ion basis}) \le 1.5 \ \ldots\ldots (1)$$

$$0.11 \leq \text{(Amount of (E) on metal ion basis)/(Amount of (D) on carboxylate ion basis)} \leq 100 \ \dots(2); \text{ and}$$

wherein an elongational viscosity of the resin composition as measured at 210°C at 100 $S^{-1}$ satisfies the following expression (3):

$$350 \leq \text{(Elongational viscosity (Pa} \cdot \text{s))} \leq 47{,}000 \ \dots(3)$$

2. The ethylene-vinyl alcohol copolymer resin composition according to claim 1, wherein the amount of the aliphatic carboxylic acid metal salt (E) on a metal ion basis is 1 to 500 ppm based on a total amount of the ethylene-vinyl alcohol copolymer (A), the polyamide resin (B), the acetic acid and/or its salt (C), the aliphatic carboxylic acid (D), and the aliphatic carboxylic acid metal salt (E).

3. The ethylene-vinyl alcohol copolymer resin composition according to claim 1 or 2, wherein the amount of the aliphatic carboxylic acid (D) on a carboxylate ion basis is 0.001 to 450 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E).

4. The ethylene-vinyl alcohol copolymer resin composition according to any one of claims 1 to 3, wherein the amount of the acetic acid and/or its salt (C) on an acetate ion basis is 10 to 2,000 ppm based on the total amount of the ethylene-vinyl alcohol copolymer (A), the polyamide resin (B), the acetic acid and/or its salt (C), the aliphatic carboxylic acid (D), and the aliphatic carboxylic acid metal salt (E).

5. The ethylene-vinyl alcohol copolymer resin composition according to any one of claims 1 to 4, further comprising: (F) boric acid and/or its salt;
wherein the boric acid and/or its salt (F) is present in an amount of 0.001 to 500 ppm on a boron basis based on a total amount of the ethylene-vinyl alcohol copolymer (A), the polyamide resin (B), the acetic acid and/or its salt (C), the aliphatic carboxylic acid (D), the aliphatic carboxylic acid metal salt (E), and the boric acid and/or its salt (F).

6. The ethylene-vinyl alcohol copolymer resin composition according to any one of claims 1 to 5, wherein a ratio (E)/(F) of the amount of the aliphatic carboxylic acid metal salt (E) on a metal ion basis to the amount of the boric acid and/or its salt (F) on a boron basis is $0.11 \leq (E)/(F) \leq 100$ on a weight basis.

7. A multilayer structure comprising a plurality of layers including a layer formed from the ethylene-vinyl alcohol copolymer resin composition according to any one of claims 1 to 6.

8. A package comprising the multilayer structure according to claim 7.

## INTERNATIONAL SEARCH REPORT

| International application No. |
|---|
| PCT/JP2021/022569 |

**A. CLASSIFICATION OF SUBJECT MATTER**
Int.Cl. B32B27/28(2006.01)i, C08K5/09(2006.01)i, C08K5/098(2006.01)i,
C08L29/04(2006.01)i, C08L77/00(2006.01)i, C08K3/38(2006.01)i
FI: C08L29/04S, C08K5/09, C08K5/098, C08L77/00, C08K3/38, B32B27/28102
According to International Patent Classification (IPC) or to both national classification and IPC

**B. FIELDS SEARCHED**

Minimum documentation searched (classification system followed by classification symbols)
Int.Cl. B32B27/28, C08K5/09, C08K5/098, C08L29/04, C08L77/00, C08K3/38

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2019/083000 A1 (THE NIPPON SYNTHETIC CHEMICAL INDUSTRY CO., LTD.) 02 May 2019 (2019-05-02), claims 1, 5, 6, paragraphs [0007], [0050]-[0052], [0088]-[0090] | 1-4, 7, 8<br>5, 6 |
| Y | JP 49-20615 B1 (SHOWA DENKO KK) 25 May 1974 (1974-05-25), claims, column 2, lines 2-21, tables 1-4 | 5, 6 |
| A | WO 2019/004258 A1 (THE NIPPON SYNTHETIC CHEMICAL INDUSTRY CO., LTD.) 03 January 2019 (2019-01-03), entire text | 1-8 |
| A | WO 2019/103079 A1 (THE NIPPON SYNTHETIC CHEMICAL INDUSTRY CO., LTD.) 31 May 2019 (2019-05-31), entire text | 1-8 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 July 2021 | 20 July 2021 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2021/022569 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2016-121335 A (THE NIPPON SYNTHETIC CHEMICAL INDUSTRY CO., LTD.) 07 July 2016 (2016-07-07), entire text | 1-8 |
| A | JP 2012-504689 A (E. I. DU PONT DE NEMOURS AND COMPANY) 23 February 2012 (2012-02-23), entire text | 1-8 |
| A | JP 2002-210887 A (THE NIPPON SYNTHETIC CHEMICAL INDUSTRY CO., LTD.) 31 July 2002 (2002-07-31), entire text | 1-8 |
| A | JP 2001-200123 A (THE NIPPON SYNTHETIC CHEMICAL INDUSTRY CO., LTD.) 24 July 2001 (2001-07-24), entire text | 1-8 |

Form PCT/ISA/210 (second sheet) (January 2015)

INTERNATIONAL SEARCH REPORT

Information on patent family members

International application No.

PCT/JP20217022569

| | | |
|---|---|---|
| WO 2019/083000 A1 | 02 May 2019 | US 2020/0172712 A1<br>claims 1, 5, 6, paragraphs [0012],<br>[0063]-[0066], [0111]-[0121]<br>CN 111032775 A<br>TW 201922899 A |
| JP 49-20615 B1 | 25 May 1974 | (Family: none) |
| WO 2019/004258 A1 | 03 January 2019 | US 2020/0095396 A1<br>entire text<br>EP 3647359 A1<br>CN 110678514 A<br>TW 201905009 A |
| WO 2019/103079 A1 | 31 May 2019 | CN 111295421 A<br>TW 201925249 A |
| JP 2016-121335 A | 07 July 2016 | (Family: none) |
| JP 2012-504689 A | 23 February 2012 | US 2010/0080943 A1<br>entire text<br>WO 2010/039766 A1<br>EP 2334729 A1<br>CN 102171282 A<br>TW 201022347 A |
| JP 2002-210887 A | 31 July 2002 | (Family: none) |
| JP 2001-200123 A | 24 July 2001 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI41992131237 A
- JP SHO611986220839 A
- JP SHO621987152847 A
- JP HEI11989279949 A
- JP HEI31991192140 A
- JP 2011506628 A

**Non-patent literature cited in the description**

- *Polymer Engineering Science,* 1972, vol. 12, 64-73